# EUROPEAN PATENT APPLICATION

(11) **EP 2 268 104 A1**
(43) Date of publication of application: **29.12.2010**
(21) Application number: 09731565.9
(22) Date of filing: 14.04.2009
(51) Int. Cl.: H05B 6/70, H05B 6/72

(54) **MICROWAVE HEATING DEVICE**

(30) Priority: 15.04.2008 JP 2008105416; 15.04.2008 JP 2008105417; 27.08.2008 JP 2008218044; 31.10.2008 JP 2008280936; 31.10.2008 JP 2008280937; 31.10.2008 JP 2008280938
(71) Applicant: Panasonic Corporation, Kadoma-shi Osaka 571-8501 (JP)
(72) Inventor: YOSHINO, Koji, Chuo-ku, Osaka-shi, Osaka 540-6207 (JP); KAWAI, Hiroshi, Chuo-ku, Osaka-shi, Osaka 540-6207 (JP)
(74) Representative: Schwabe - Sandmair - Marx
(86) International application number: PCT/JP2009/001709
(87) International publication number: WO 2009/128251

(57) **Abstract**

In a microwave heating apparatus provided with a waveguide (32) for propagating a microwave from microwave generation means to a heating chamber, the waveguide having a square section orthogonal to a propagation route has a bent propagation route, and includes a pair of magnetic field surfaces facing each other, and a pair of electric field

surfaces facing each other, and one of the magnetic field surfaces has a vertical surface (43), a horizontal surface (47), and a sloping surface (44) making predetermined angles with the horizontal surface and the vertical surface, the one of the magnetic field surfaces being provided with a mechanism (42) into which the microwave from the microwave generation means is introduced, and a mechanism (38) for radiating the microwave propagated through the waveguide to the heating chamber.

## Description

### Technical Field

The present invention relates to a microwave heating apparatus for heating an object to be heated by a microwave.

### Background Art

Since a microwave oven serving as a representative microwave heating apparatus is capable of directly heating food serving as an object to be heated for example, and hence is convenient with no need for preparing a pot or a cooker as a heating tool. Thus, the microwave oven is an essential cooling tool for living. In the microwave oven in such a use situation, recently, there is an unavoidable object of reducing a power consumption amount and saving energy in consideration with environment.

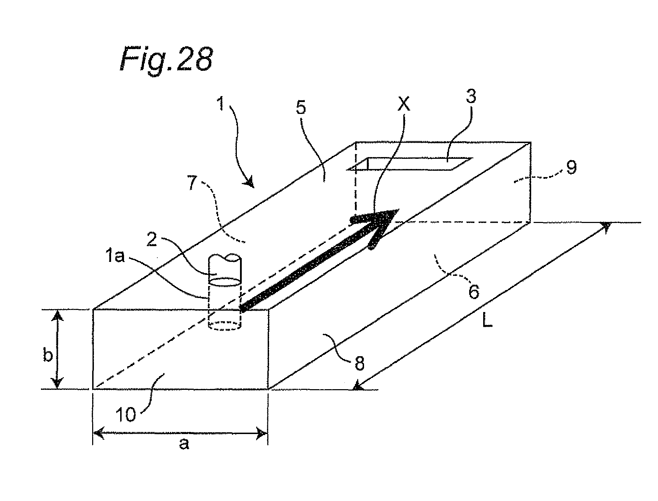

In a general microwave oven, a microwave generated in a magnetron serving as representative microwave generation means is guided to a heating chamber via a waveguide and radiated into the heating chamber. The waveguide used in such a microwave oven will be described with reference to a schematic view of the waveguide shown in Fig. 28. Fig. 28 is a perspective view showing a schematic configuration of a general waveguide 1. As shown in Fig. 28, the waveguide 1 basically has a rectangular parallelepiped shape. It is known that when the reference character a denotes a width, the reference character b denotes a height, the reference character L denotes a length, and the reference character λ denotes a wavelength of the microwave to be propagated with the waveguide 1, by selecting a shape within a range of λ/2 < a < λ, and b < λ/2, the microwave is propagated in a mode called a TE10 mode. In a representative microwave oven, the wavelength λ of the microwave to be used is about 120 mm. Thus, the shape is often selected so that the width is within a range from 80 to 110 mm, and the height b is within a range from 15 to 40 mm.

In the waveguide 1 shown in Fig. 28, among pairs of surfaces parallel to the propagation direction, surfaces forming the width a (larger surfaces) are called H surfaces serving as magnetic field surfaces, and surfaces forming the height b (smaller surfaces) are called E surfaces serving as electric field surfaces. In Fig. 28, a pair of H surfaces is shown as a first H surface 5 and a second H surface 6. A pair of E surfaces is shown as a first E surface 7 and a second E surface 8.

In the waveguide 1 shown in Fig. 28, an antenna 2 for radiating the microwave from a magnetron is inserted into the one end side of the first H surface 5 of the waveguide 1. The microwave radiated from the antenna 2 into the waveguide 1 is propagated in the direction toward the other end side of the waveguide 1 (the arrow X direction of Fig. 28). On the other end side of the waveguide 1, for example an opening 3 is formed. By combining this opening 3 with a heating chamber, the microwave propagated through the inside of the waveguide 1 can be guided into the heating chamber. It should be noted that short surfaces 9, 10 serving as end surfaces on the both sides of the waveguide 1 are closed so that the microwave is not leaked out to the exterior. The waveguide 1 can be not only formed into a straight pipe as in Fig. 28 but can also be bent.

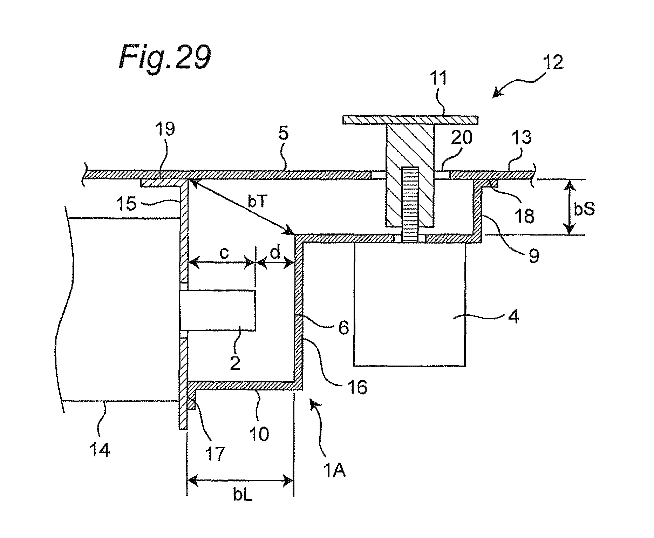

Fig. 29 is a sectional view showing a waveguide 1A bent at a right angle. As shown in Fig. 29, in the waveguide 1A, the first H surface 5 and the second H surface in the magnetic surfaces are bent at a right angle. On the side of a bottom surface of the heating chamber, an antenna space 12 in which a rotation antenna 11 is arranged is formed. A bottom plate 13 forming a bottom surface of the antenna space 12 serves as a horizontal part of the first H surface 5 of the waveguide 1A. The antenna 2 of a magnetron 14 is inserted and arranged into a vertical part of the first H surface 5 bent at a right angle. The waveguide 1A bent at a right angle in such a manner is disclosed in, for example, Patent Literatures 1 to 3.

In a case of the waveguide 1A shown in Fig. 29, the first H surface 5 is formed by connecting a first plate 15 to which the magnetron 14 is attached and into which the antenna 2 is inserted and the bottom plate 13 of the antenna space 12. The second H surface 6 is formed by part of a second plate 16. The second plate 16 is formed by bending a plate material, so that the second plate forms not only the second H surface 6 but also the short surfaces 9, 10 serving as end surfaces of the waveguide 1A, and a first E surface and a second E surface orthogonal to the H surfaces and the short surfaces. The bottom plate 13, the first plate 15, and the second plate 16 are jointed to each other by a spot welding or compression joint. In Fig. 29, part of joint parts is shown by the reference numerals 17, 18, 19. In the joint part 19 between the first plate 15 to which the magnetron 14 is fixed and the bottom plate 13, in order to easily joint the first plate and the bottom plate, an upper end of the first plate 15 is bent outward so as to be parallel to a horizontal surface of the bottom plate 13.

A combination hole 20 is formed in a part of the bottom plate serving as the first H surface 5. In a center of the combination hole 20, the rotatable rotation antenna 11 is arranged. A drive shaft of a motor 4 serving as drive means is fitted into the rotation antenna 11, so that the rotation antenna is rotated by drive of the motor 4.

In the microwave oven formed in such a manner, the microwave radiated from the antenna 2 of the magnetron 14 is propagated through the inside of the waveguide 1A and radiated into the heating chamber via the rotation antenna 11.

In the waveguide, it is known that part of the waveguide is deformed so as to form a matching portion in order to reduce a propagation loss of the waveguide (for example, refer to Patent Literature 4).

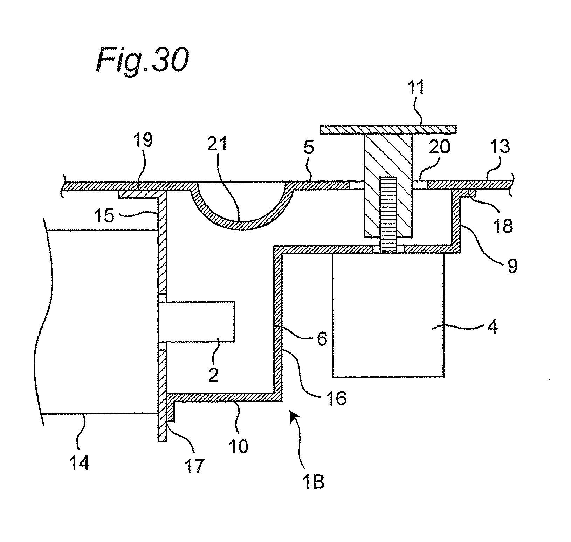

In general, it is known that part of a wall surface of the waveguide is deformed so as to perform matching for efficiently propagating the microwave from the magnetron to the inside of the heating chamber. In a case where the waveguide is a rectangular parallelepiped formed into an elongated shape, the matching portion can be freely formed in the wall surface of the waveguide. However, in a case where the waveguide is short and formed into a bent shape as shown in Fig. 29, it is difficult to form the matching portion at a proper position of the waveguide. It is incorrect that the matching portion can be formed anywhere in the waveguide. In a case where the matching portion is formed in the vicinity of the antenna 2 and the rotation antenna 11, there is an anxiety that a discharge phenomenon is generated between the antennas 2, 11 and the matching portion. There is also a problem that it is difficult to form the matching portion in the vicinity of a bent part and the joint parts of the waveguide in terms of a structure. Further, in a case where the matching portion is formed at a position close to the motor 4 serving as the drive means, there is a problem that the matching portion disturbs attachment of the motor 4, so that assembling is complicated. Therefore, as one method for solving such problems, the present applicant used to consider that part of the bottom plate 13 forming the bottom surface of the antenna space 12 is deformed so as to form a matching portion 21 as shown in Fig. 30. In a waveguide 1B shown in Fig. 30, in addition to the configuration of the waveguide 1A shown in Fig. 29, by making part of the bottom plate 13 of the antenna space 12 in the first H surface 5 protrude toward the inside of the waveguide 1B, the matching portion 21 is formed.

There is a proposal that in the conventional microwave heating apparatus, the opening part in which the drive shaft of the rotation antenna is arranged is formed into not a circle but a thin and long rectangular shape, so that the rotation antenna 11 is rotated and at the same time moved linearly and reciprocally in the longitudinal direction of the opening part (for example, refer to Patent Literature 5). In the conventional microwave heating apparatus formed in such a manner, the motor can be arranged at a desired position, and the matching portion can be formed at a desired position. However, there are problems that the structure is complicated, size is increased, and manufacturing cost is also increased.

### Citation List

### Patent Literatures

PLT 1: Unexamined Japanese Patent Publication No. 2007-42333
PLT 2: Unexamined Japanese Patent Publication No. 2007-327674
PLT 3: Unexamined Japanese Patent Publication No. 2006-196336
PLT 4: Unexamined Japanese Patent Publication No. 2005-019195
PLT 5: Unexamined Japanese Patent Publication No. 2006-278313
PLT 6: Unexamined Japanese Patent Publication No. H2-75190

### Summary of Invention

### Technical Problem

In a microwave heating apparatus in which a waveguide having a bent propagation route is used, as described above, in a case where a magnetron serving as microwave generation means is connected in the vicinity of the one end side of the waveguide, so that a microwave is inputted, and an opening or the like is formed in the vicinity of the other end side of the waveguide, so that the microwave is radiated to a heating chamber, the microwave inputted from the magnetron is reflected in a complicated manner in a bent part, so that a propagation loss is generated. In order to reduce such a propagation loss, the present inventors formed a matching portion 21 as shown in Fig. 30 in a wall surface of the waveguide. However, heating efficiency was not increased and an energy saving performance was not improved.

The present invention is achieved in consideration with the above situations, and an object of the present invention is to provide a configuration that in a microwave heating apparatus in which the microwave is inputted in the vicinity of the one end side of a waveguide having a bent propagation route and the microwave is radiated from the vicinity of the other end side to a heating chamber, the propagation loss in the waveguide is reduced, the heating efficiency is increased and the energy saving performance is improved.

### Solution to Problem

A microwave heating apparatus of a first aspect according to the present invention is a microwave heating apparatus including microwave generation means, a heating chamber accommodating an object to be heated, and a waveguide for propagating a microwave from the microwave generation means to the heating chamber, wherein the waveguide having a square section orthogonal to a propagation route has a bent propagation route, and includes a pair of magnetic field surfaces facing each other, and a pair of electric field surfaces facing each other, and one magnetic field surface of the pair of magnetic field surfaces has a vertical surface, a horizontal surface, and a sloping surface making predetermined angles with the horizontal surface and the vertical surface, the one magnetic field surface being provided with a mechanism into which the microwave from the microwave generation means is introduced, and a mechanism for radiating the microwave propagated through the waveguide to the heating chamber. With the microwave heating apparatus of the first aspect formed in such a manner, a propagation loss in a bent part in the bent waveguide is reduced, heating efficiency is increased, and an energy saving performance is dramatically improved.

In a microwave heating apparatus of a second aspect according to the present invention, the sloping surface in the magnetic field surface of the first aspect is formed between the vertical surface and the horizontal surface so that the vertical surface and the horizontal surface are continuous to each other for shortening the propagation route of the waveguide. With the microwave heating apparatus of the second aspect formed in such a manner, the propagation loss in the waveguide is considerably reduced.

In a microwave heating apparatus of a third aspect according to the present invention, preferably, a shortest distance from the mechanism into which the microwave from the microwave generation means is introduced, the mechanism being provided in the magnetic field surface of the first aspect, to a formation position of the sloping surface in the magnetic field surface is a length within a range from 1/8 to 3/8 of a wavelength of the microwave.

In general, considering the entire space containing the waveguide and the heating chamber, this space is a closed space for the microwave. Thus, it is thought that the space works as a resonator, and a standing wave is generated even in the waveguide. The standing wave always has maximum amplitude (a loop of the standing wave) at a position of a center of an antenna, and the maximum amplitude (the loop of the standing wave) is repeated for every 1/2 of the wavelength. Therefore, around the antenna, a position of the maximum amplitude next to the center of the antenna is a position distant from the center of the antenna by 1/2 of the wavelength. Meanwhile, at the time of resonance, strength of an electric field and a magnetic field is maximum at the position of the maximum amplitude. Thus, it is thought that when a bent portion is at the position, the propagation loss is increased. In the present invention, a position where the sloping surface is formed in the magnetic field surface (a H surface) is the bent portion of the waveguide in which an angle of the magnetic field surface is changed, and the shortest distance from the mechanism into which the microwave from the microwave generation means is introduced such as the antenna to the position where the sloping surface is formed is the length within a range from 1/8 to 3/8 of the wavelength. Therefore, in the microwave heating apparatus of the third aspect according to the present invention, the microwave twice has the maximum amplitude at the position of the center of the antenna and the position distant from the antenna by 1/2 of the wavelength. However, since the wall surface of the waveguide at a position different from these positions of the maximum amplitude is sloped, the propagation loss can be reduced.

In a microwave heating apparatus of a fourth aspect according to the present invention, preferably, the mechanism into which the microwave is introduced, the mechanism being provided in the magnetic field surface of the third aspect, is an antenna, and a shortest distance from a center of the antenna to the formation position of the sloping surface in the magnetic field surface is a length of 1/4 ± 20% of the wavelength of the microwave. With the microwave heating apparatus of the fourth aspect formed in such a manner, the microwave twice has the maximum amplitude at the position of the center of the antenna and the position distant from the antenna by 1/2 of the wavelength. However, the position where the sloping surface is formed is distant from the center of the antenna by the length of 1/4 ± 20% of the wavelength, and hence just in the middle of the two positions of the maximum amplitude. As a result, in the microwave heating apparatus of the fourth aspect according to the present invention, since the sloping surface is at a position of minimum amplitude (a node of the standing wave), the propagation loss can be reduced.

In a microwave heating apparatus of a fifth aspect according to the present invention, a matching portion may be provided in the sloping surface in the magnetic field surface of the first aspect. With the microwave heating apparatus of the fifth aspect formed in such a manner, the matching portion in a desired shape can be formed without influencing the heating chamber, and the heating apparatus capable of easily performing designing, reducing the propagation loss, and increasing the energy saving performance can be provided.

In a microwave heating apparatus of a sixth aspect according to the present invention, the matching portion of the fifth aspect may be formed by deforming part of the sloping surface by a press forming. With the microwave heating apparatus of the sixth aspect formed in such a manner, the matching portion in a desired shape can be easily formed.

In a microwave heating apparatus of a seventh aspect according to the present invention, preferably, in the waveguide of the first aspect, a distance between the pair of magnetic field surfaces in an area where the mechanism into which the microwave from the microwave generation means is introduced is provided is within a range from one to two times more than a distance between the pair of magnetic field surfaces in an area where the mechanism for radiating the microwave propagated through the waveguide to the heating chamber is provided. With the microwave heating apparatus of the seventh aspect formed in such a manner the propagation loss in the bent waveguide can be reduced, the heating efficiency can be increased and the energy saving performance can be improved.

In a microwave heating apparatus of an eighth aspect according to the present invention, preferably, in the waveguide of the seventh aspect, the distance between the pair of magnetic field surfaces in the area where the mechanism into which the microwave from the microwave generation means is introduced is provided is a length of 1/4 ± 20% of a wavelength of the microwave from the microwave generation means, and the distance between the pair of magnetic field surfaces in the area where the mechanism for radiating the microwave to the heating chamber is provided is a length of 1/8 ± 20% of the wavelength of the microwave from the microwave generation means. With the microwave heating apparatus of the eighth aspect formed in such a manner, a ratio between the distance (bL) between the pair of magnetic field surfaces in the area where the mechanism into which the microwave is introduced is provided and the distance (bS) between a pair of the magnetic field surfaces in the area where the mechanism for radiating the microwave to the heating chamber is provided can be 1 to 2, and "bS < λ/2, bL < λ/2" is satisfied. Thus, the microwave can be surely propagated in a mode having the most compact configuration called a TE10 mode.

In a microwave heating apparatus of a ninth aspect according to the present invention, in the waveguide of the seventh aspect and the eighth aspect, a convex portion protruding toward the outside of the waveguide may be formed in the other magnetic field surface facing the one magnetic field surface provided with the mechanism into which the microwave from the microwave generation means is introduced. With the microwave heating apparatus of the ninth aspect formed in such a manner, in a case where the mechanism into which the microwave from the microwave generation means is introduced is for example an antenna, a distance between the antenna and the wall surface serving as a facing part to the antenna can be set to be long, and the distance (bL) between the pair of magnetic field surfaces in the area where the antenna is provided can be set to be short. Therefore, with the microwave heating apparatus of the ninth aspect, the ratio between the distance (bL) between the pair of magnetic field surfaces in the area where the mechanism into which the microwave is introduced is provided and the distance (bS) between the pair of magnetic field surfaces in the area where the mechanism for radiating the microwave to the heating chamber is provided can be a desired value. Thus, while reducing a loss in introduction of the microwave from the microwave generation means, the propagation loss in the bent part can be reduced, a decrease in the heating efficiency can be prevented and the energy saving performance can be improved.

In a microwave heating apparatus of a tenth aspect according to the present invention, the mechanism for radiating the microwave propagated through the waveguide of the first aspect to the heating chamber may include an opening portion formed in a wall surface of the heating chamber, and a radiation guide for making the opening portion protrude toward a side of the heating chamber may be formed in the wall surface of the heating chamber. With the microwave heating apparatus of the tenth aspect formed in such a manner, the microwave can be smoothly propagated from the waveguide to the heating chamber, the heating efficiency can be increased and the energy saving performance can be improved.

In a microwave heating apparatus of an eleventh aspect according to the present invention, the radiation guide of the tenth aspect may be formed so as to protrude toward an inside of the heating chamber in an outer peripheral part of the opening portion, the radiation guide having a shape so that part of an annular shape in a plan view is cut out. With the microwave heating apparatus of the eleventh aspect formed in such a manner, a member for forming the waveguide such as a joint member can be provided in the vicinity of the cut-out part of the radiation guide, so that size of the waveguide can be decreased. As a result, with the microwave heating apparatus of the eleventh aspect according to the present invention, the propagation loss in the wall surface of the waveguide can be reduced and the energy saving performance can be improved.

In a microwave heating apparatus of a twelfth aspect according to the present invention, the radiation guide formed in the outer peripheral part of the opening portion of the eleventh aspect may have a substantially D shape in a plan view. With the microwave heating apparatus of the twelfth aspect formed in such a manner, the member for forming the waveguide such as the joint member can be provided in the vicinity of a straight part of the D shape, so that the size of the waveguide can be decreased. As a result, with the microwave heating apparatus of the twelfth aspect according to the present invention, the propagation loss in the wall surface of the waveguide can be reduced and the energy saving performance can be improved.

In a microwave heating apparatus of a thirteenth aspect according to the present invention, the radiation guide formed in the outer peripheral part of the opening portion of the eleventh aspect may have a symmetrical shape relative to a propagation direction of the waveguide in a plan view. With the microwave heating apparatus of the thirteenth aspect formed in such a manner, the microwave can be smoothly propagated from the waveguide to the heating chamber, the heating efficiency can be increased and the energy saving performance can be improved.

In a microwave heating apparatus of a fourteenth aspect according to the present invention, a discharge prevention hole for reducing strength of an electric field in a particular area is formed in a wall surface forming the waveguide in the configuration of the first aspect. With the microwave heating apparatus of the fourteenth aspect formed in such a manner, by forming the discharge prevention hole in the wall surface of the waveguide, the electric field is not generated in the hole itself. Thus, the strength of the electric field is weakened, and generation of spark discharge is reduced, so that the heating apparatus becomes highly safe and reliable.

In a microwave heating apparatus of a fifteenth aspect according to the present invention, the discharge prevention hole of the fourteenth aspect may be formed in the wall surface of a corner part of the waveguide having the bent propagation route of the microwave. With the microwave heating apparatus of the fifteenth aspect formed in such a manner, the discharge prevention hole is formed in the wall surface of the corner part of the waveguide where the spark discharge is easily generated. Thus, the generation of the spark discharge is suppressed, so that the heating apparatus becomes highly safe and reliable. With the microwave heating apparatus of the fifteenth aspect, the heating apparatus has an excellent effect with a simple design in which the discharge prevention hole is formed in the wall surface of the corner part.

In a microwave heating apparatus of a sixteenth aspect according to the present invention, the discharge prevention hole of the fifteenth aspect may be formed in the sloping surface of the waveguide. With the microwave heating apparatus of the sixteenth aspect formed in such a manner, the heating apparatus becomes highly safe and reliable with a simple design in which the discharge prevention hole is formed in the sloping surface of the bent waveguide.

In a microwave heating apparatus of a seventeenth aspect according to the present invention, the mechanism into which the microwave is introduced, the mechanism being provided in the magnetic field surface of the fourteenth aspect, may be an antenna, and the discharge prevention hole may be formed at a position distant from a center of the antenna by a length of not more than 1/4 ± 20% of a wavelength of the microwave in the magnetic field surface. With the microwave heating apparatus of the seventeenth aspect formed in such a manner, the heating apparatus becomes highly safe and reliable.

As described above, considering that the standing wave is generated in the waveguide, the position of the antenna for radiating the microwave is the loop of the standing wave (the position where the strength of the electric field is maximum), and the position distant from the antenna by 1/4 of the wavelength is to be the node of the standing wave (the position where the strength of the electric field is minimum). Therefore, an electric potential difference between the position of the antenna and the position distant from the antenna by 1/4 of the wavelength is always large, and both the positions are in a relationship by which a discharge phenomenon is easily generated. However, by forming the discharge prevention hole at the position distant from the center of the antenna by the length of not more than 1/4 ± 20% of the wavelength, the strength of the electric field is weakened in a part of the hole, so that the discharge phenomenon is not easily generated. Therefore, with the microwave heating apparatus of the seventeenth aspect according to the present invention, the heating apparatus becomes highly safe and reliable and has an excellent effect with a simple design.

In a microwave heating apparatus of an eighteenth aspect according to the present invention, the discharge prevention hole of the fourteenth aspect may be formed in the wall surface on an upper side in a vertical direction of the mechanism into which the microwave is introduced, the mechanism being provided in the magnetic field surface.

In general, it is thought that before the discharge phenomenon is generated, the electric field is concentrated and a temperature is increased. Therefore, by preventing an increase in the temperature, a situation that the discharge phenomenon is not easily generated can be produced. With the microwave heating apparatus of the eighteenth aspect according to the present invention, heat in the waveguide can be released from the discharge prevention hole to the exterior. Thus, the heat due to the increase in the temperature in the mechanism into which the microwave is introduced such as the antenna is not kept on the upper side of the antenna, so that abnormal local heating can be prevented so as to reduce the generation of the discharge phenomenon. Therefore, with the microwave heating apparatus of the eighteenth aspect according to the present invention, the heating apparatus becomes highly safe and reliable and has an excellent effect with a simple design.

In a microwave heating apparatus of a nineteenth aspect according to the present invention, a protruding direction of a burr formed when press processing the discharge prevention hole of the fourteenth aspect is outward of the waveguide. In general, the electric field is easily concentrated on an edge part, and the discharge phenomenon is easily generated in the part. With the microwave heating apparatus of the nineteenth aspect according to the present invention, the burr serving as the edge part formed at the time of the press processing of the discharge prevention hole is outward of the waveguide, so that there is no edge part inside the waveguide. Thus, the generation of the discharge phenomenon is suppressed inside the waveguide, and the heating apparatus becomes highly safe and reliable.

In a microwave heating apparatus of a twentieth aspect according to the present invention, in the other magnetic field surface facing the one magnetic field surface provided with the mechanism into which the microwave from the microwave generation means is introduced and the mechanism for radiating the microwave propagated through the waveguide to the heating chamber of the fourteenth aspect, the discharge prevention hole is formed in an area facing the sloping surface forming the one magnetic field surface. With the microwave heating apparatus of the twentieth aspect formed in such a manner, the strength of the electric field can be weakened in the discharge prevention hole, and the heat in the waveguide can be released to the exterior. Thus, the heating apparatus becomes highly safe and reliable.

In a microwave heating apparatus of a twenty-first aspect according to the present invention, in the other magnetic field surface facing the one magnetic field surface provided with the mechanism into which the microwave from the microwave generation means is introduced and the mechanism for radiating the microwave propagated through the waveguide to the heating chamber of the first aspect, a sloping surface may be formed so as to face the sloping surface formed in the one magnetic field surface. With the microwave heating apparatus of the turenty-first aspect formed in such a manner, the propagation loss in the bent part in the bent waveguide can be reduced, the heating efficiency can be increased and the energy saving performance can be improved.

In a microwave heating apparatus of a twenty-second aspect according to the present invention, the sloping surface in the magnetic field surface of the first aspect is formed to be a curved surface continuously connecting the vertical surface and the horizontal surface for shortening the propagation route of the waveguide. With the microwave heating apparatus of the twenty-second aspect formed in such a manner, the propagation loss in the bent part in the bent waveguide can be reduced, the heating efficiency can be increased and the energy saving performance can be improved.

In a microwave heating apparatus of a twenty-third aspect according to the present invention, the sloping surface in the magnetic field surface of the first aspect may be formed in a corner part between the vertical surface and the horizontal surface and formed in at least part of the magnetic field surface in a width direction orthogonal to the propagation route. With the microwave heating apparatus of the twenty-third aspect formed in such a manner, strength of the bent waveguide can be increased and the heating apparatus becomes highly reliable.

In a microwave heating apparatus of a twenty-fourth aspect according to the present invention, the discharge prevention hole of the fourteenth aspect is formed in the wall surface at a position corresponding to a node of a standing wave in the waveguide for propagating the microwave. With the microwave heating apparatus of the twenty-fourth aspect formed in such a manner, the electric potential difference between the position of the loop of the standing wave (the position where the strength of the electric field is maximum) and the position of the node of the standing wave (the position where the strength of the electric field is minimum) is large. However, since the discharge prevention hole is formed at the position corresponding to the node of the standing wave, the discharge phenomenon is not easily generated, and the heating apparatus becomes highly safe and reliable.

### Advantageous Effects of Invention

According to the present invention, a microwave heating apparatus capable of reducing a propagation loss in a waveguide having a bent propagation route, increasing heating efficiency, and improving energy saving performance can be provided.

### Brief Description of Drawings

Fig. 1 is a sectional view showing a schematic configuration of a microwave heating apparatus of a first embodiment according to the present invention.
Fig. 2 is a sectional view showing the vicinity of a waveguide in the microwave heating apparatus of the first embodiment.
Fig. 3 is a sectional view showing a modified example of the waveguide in the microwave heating apparatus of the first embodiment.
Fig. 4 is a sectional view showing a modified example of the waveguide in the microwave heating apparatus of the first embodiment.
Fig. 5 is a sectional view showing a modified example of the waveguide in the microwave heating apparatus of the first embodiment.
Fig. 6 is a sectional view showing the vicinity of a waveguide in a microwave heating apparatus of a second embodiment according to the present invention.
Fig. 7 is a sectional view showing a schematic configuration of a microwave heating apparatus of a third embodiment according to the present invention.
Fig. 8 is a sectional view showing a schematic configuration of a microwave heating apparatus of a fourth embodiment according to the present invention.
Fig. 9 is a sectional view showing the vicinity of a waveguide in the microwave heating apparatus of the fourth embodiment.
Fig. 10 is a perspective view showing the waveguide in the microwave heating apparatus of the fourth embodiment.
Fig. 11 is a sectional view showing the vicinity of a waveguide in a microwave heating apparatus of a fifth embodiment according to the present invention.
Fig. 12 is a sectional view for illustrating a configuration of a waveguide in a microwave heating apparatus of a sixth embodiment according to the present invention.
Fig. 13 is a plan view showing a bottom surface of a heating chamber for illustrating the configuration of the waveguide in the microwave heating apparatus of the sixth embodiment.
Fig. 14 is a sectional view showing a schematic configuration of the microwave heating apparatus of the sixth embodiment.
Fig. 15 is a plan view showing the bottom surface of the heating chamber in the microwave heating apparatus of the sixth embodiment.
Fig. 16 is a sectional view showing the vicinity of a waveguide in a microwave heating apparatus of a seventh embodiment according to the present invention.
Fig. 17 is a plan view showing the bottom surface of the heating chamber in the microwave heating apparatus of the seventh embodiment.
Fig. 18 is a sectional view for illustrating a microwave heating apparatus of an eighth embodiment according to the present invention.
Fig. 19 is a sectional view showing a schematic configuration of the microwave heating apparatus of the eighth embodiment according to the present invention.
Fig. 20 is a sectional view showing the vicinity of a waveguide in the microwave heating apparatus of the eighth embodiment.
Fig. 21 is a sectional view showing the vicinity of a waveguide in a microwave heating apparatus of a ninth embodiment according to the present invention.
Fig. 22 is a sectional view showing a schematic configuration of a microwave heating apparatus of a tenth embodiment according to the present invention.
Fig. 23 is a sectional view showing the vicinity of a waveguide in the microwave heating apparatus of the tenth embodiment.
Fig. 24 is a sectional view showing the vicinity of a waveguide in a microwave heating apparatus of an eleventh embodiment according to the present invention.
Fig. 25 is a sectional view showing a schematic configuration of a microwave heating apparatus of a twelfth embodiment according to the present invention.
Fig. 26 is a sectional view showing the vicinity of a waveguide in the microwave heating apparatus of the twelfth embodiment.
Fig. 27 is a sectional view showing the vicinity of a waveguide in a microwave heating apparatus of a thirteenth embodiment according to the present invention.
Fig. 28 is a schematic configuration view for illustrating a configuration of a general waveguide.
Fig. 29 is a sectional view showing a configuration of a conventional waveguide.
Fig. 30 is a sectional view for illustrating a waveguide in a microwave heating apparatus of the present invention.

### Description of Embodiments

Hereinafter, preferred embodiments of a microwave heating apparatus of the present invention will be described with reference to the attached drawings. It should be noted that although a microwave oven will be described as the microwave heating apparatus in the following embodiments, the microwave oven is only an example. Thus, the microwave heating apparatus of the present invention is not limited to the microwave oven but includes cooking tools such as an oven and a defrost device, heating apparatuses for various dielectric materials, drying devices for wood materials and the like, and various heating apparatuses utilizing dielectric heating such as heating and sintering devices in pottery. The present invention is not limited to specific configurations in the following embodiments but includes configurations based on the same technological idea.

### (First Embodiment)

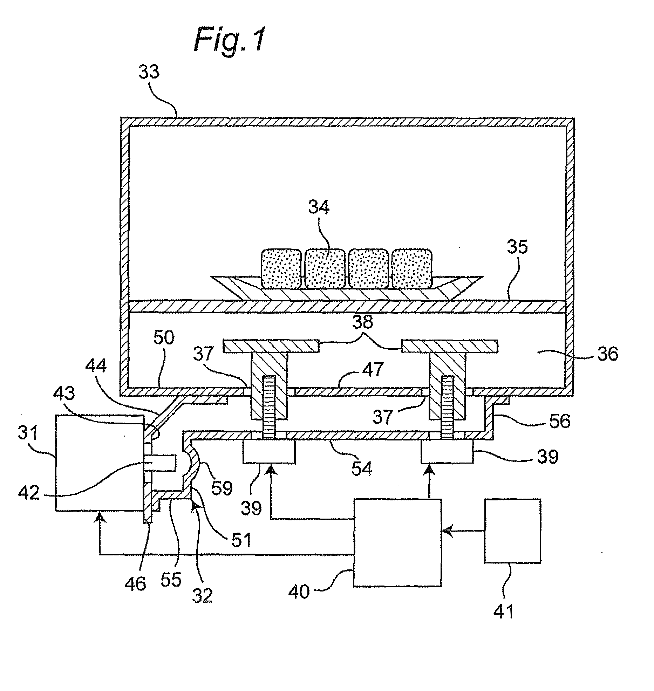

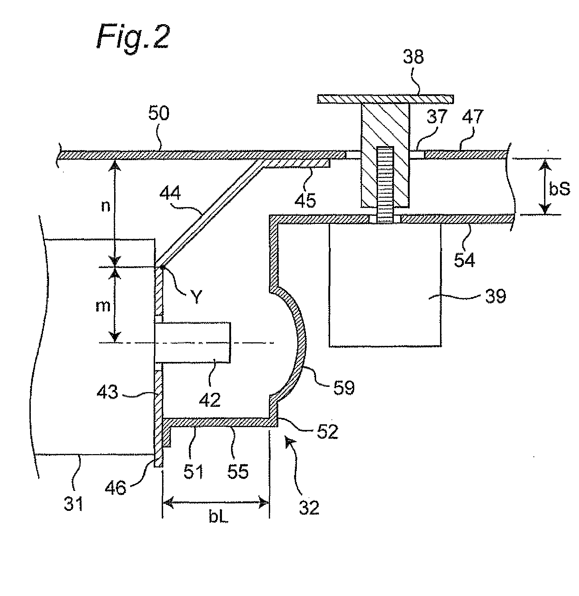

Fig. 1 is a view showing a schematic configuration of a microwave oven serving as a microwave heating apparatus of a first embodiment according to the present invention. Fig. 1 is a sectional view in which the microwave oven is seen from the front side. In the microwave oven shown in Fig. 1, a door (not shown) for bringing an object to be heated in and out of a heating chamber is provided on the near side. Fig. 2 is a sectional view showing the vicinity of a waveguide in the microwave heating apparatus of the first embodiment.

In the microwave heating apparatus of the first embodiment, a magnetron 31 serving as representative microwave generation means is provided, and a microwave radiated from the magnetron 31 is propagated through a waveguide 32 and radiated into a heating chamber 33 via two rotation antennas 38, 38. A tray base 35 on which food 34 serving as a representative object to be heated is rested is provided inside the heating chamber 33. On the lower side of the tray base 35, an antenna space 36 in which the two rotation antennas 38, 38 are arranged is formed. Combination holes 37, 37 into which drive shafts of the rotation antennas 38, 38 are inserted are formed in a bottom plate 50 also serving as a magnetic field surface (an H surface) of the waveguide 32 on the side of a bottom surface of the antenna space 36. The combination holes 37, 37 are formed at positions distant from a center of the heating chamber 33 by a substantially equal distance, and the drive shafts of the rotation antennas 38, 33 are arranged in centers of the combination holes 37, 37. Motors 39, 39 serving as drive means of the rotation antennas 38, 38 rotate the rotation antennas via the drive shafts. Rotation actions of the motors 39, 39 are controlled by a control unit 40 in accordance with a condition set by a user in a setting unit 41.

In the microwave heating apparatus of the first embodiment, the user can select a cooking menu in accordance with the food 34 serving as the object to be heated or in accordance with a cooking method of the food 34 in the setting unit 41. Based on this selection result, the control unit 40 controls the magnetron 31 so as to generate and stop the microwave, and controls the motors 39 so as to control rotation and stoppage of the rotation antennas 38, 88. As a result, the food 34 rested on the tray base 35 can be heated and cooked.

Next, the waveguide 32 used in the microwave oven serving as the microwave heating apparatus of the first embodiment will be described.

With the waveguide 32 having a rectangular section orthogonal to the propagation directions, the propagation direction of a microwave input part in which an antenna 42 of the magnetron 31 is provided and into which the microwave is introduced and the propagation direction of a microwave output part in which the rotation antennas 38, 38 are provided and from which the microwave is discharged to the heating chamber 33 make a substantially right angle in the waveguide 32. The waveguide 32 has a pair of H surfaces serving as magnetic field surfaces and facing each other (a first H surface and a second H surface), and a pair of E surfaces serving as electric field surfaces and facing each other (a first E surface and a second E surface).

As shown in Fig. 2, the first H surface is formed by a vertical surface 43 into which the antenna 42 of the magnetron 31 is inserted, a sloping surface 44, and part of the bottom plate 50 of the antenna space 36. The second H surface is formed by a vertical surface 52 having an expanded part facing a front end of the antenna 42 of the magnetron 31, and a horizontal surface 54 to which the motors 39, 39 for driving the rotation antennas 38, 38 are jointed.

In the waveguide 32 of the first embodiment, as shown in Fig. 2, a first plate 46 forms the vertical surface 43 and the sloping surface 44 of the first H surface, and the bottom plate 50 forms a horizontal surface 47 of the first H surface. An end 45 on the side of the heating chamber extending from the sloping surface 44 in the first plate 46 is horizontally bent so as to be parallel to the bottom plate 50. The end 45 is fixed to the bottom plate 50 by joint means such as a spot welding and a compression joint.

Meanwhile, the second H surface is formed by bending a second plate 51. The second plate 51 is bent so as to form the E surfaces serving as the both sides of the second H surface, and short surfaces 55, 56 serving as both end surfaces of the waveguide 32.

The sloping surface 44 is formed in a corner part connecting the microwave input part in which the antenna 42 of the magnetron 31 is provided and the microwave output part in which the rotation antennas 38, 38 are provided in the first H surface of the waveguide 32. In the waveguide 32 of the first embodiment, the corner part in the waveguide is obliquely cut for shortening a propagation route of the microwave in comparison to configurations of waveguides 1A, 1B shown in Figs. 29 and 30.

In the waveguide 32 in the microwave heating apparatus of the first embodiment, a bending start position Y (refer to Fig. 2) of the sloping surface 44 in the first H surface has a distance m from a center of the antenna 42 in the vertical direction of about 25 mm. In comparison to a wavelength of the microwave (about 120 mm) to be used in the microwave oven, the distance m is a distance of about 1/4 wavelength (about 30 mm). It should be noted that, herein, about 1/4 wavelength is within a range of 1/4 ± 20% of the wavelength of the microwave to be used. A distance n from the bending start position Y to the bottom plate 50 forming a bottom surface of the heating chamber 33 is similarly about 25 mm. In the waveguide 32 of the first embodiment, although an angle made by the sloping surface 44 and the bottom surface of the heating chamber 33 is about 45 degrees, a preferable range of this angle is from 30 to 60 degrees.

The second plate 51 forms the second H surface facing the first H surface. The second H surface is formed by the vertical surface 52 in which a convex portion 59 expanded outward is formed at a position facing the front end of the antenna 42, and the horizontal surface 54 parallel to the bottom surface of the heating chamber 33.

It should be noted that a sloping surface facing the sloping surface 44 of the first H surface may be formed between the vertical surface 52 and the horizontal surface 54 as a modified example of the waveguide. By forming the sloping surface facing the first H surface in the second H surface in such a manner, a propagation loss of the microwave can be more reduced in the corner part.

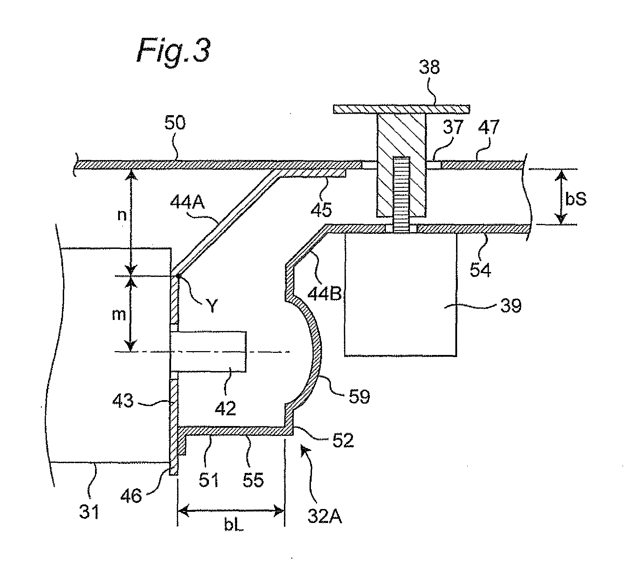

Fig. 3 is a sectional view showing a waveguide 32A in which the sloping surface is formed in the second H surface so as to face the sloping surface of the first H surface as described above. As shown in Fig. 3, in the waveguide 32A, sloping surfaces 44A, 44B facing each other are respectively formed in the first H surface and the second H surface facing each other. With the waveguide 32A formed in such a manner, the microwave is more smoothly propagated, and the propagation loss can be considerably reduced. Specific dimensions of the waveguide 32 in the microwave heating apparatus of the first embodiment are not shown since Figs. 1 and 2 are both sectional views cut at centers of the H surfaces of the waveguide 32. However, a width (a dimension shown by a width a in Fig. 28) is about 85 mm. Regarding heights of the waveguide 32 (a dimension shown by a width b in Fig. 28), a height of the microwave input part in which the antenna 42 of the magnetron 31 is provided (a height shown by the reference character bL in Fig. 2) is about 31 mm, and a height of the microwave output part in which the rotation antennas 38 are provided (a height shown by the reference character bS in Fig. 2) is about 16.5 mm.

The convex portion 59 formed in the vertical surface 52 of the waveguide 32 is formed by a press forming. The convex portion 59 is expanded outward so as to ensure a distance between the front end of the antenna 42 and a facing wall surface of the waveguide even in a case where the height bL of the waveguide 32 is low, and hence prevent generation of spark discharge.

It should be noted that although the bent part in the waveguide 32 shown in Figs. 1 and 2 is drawn to have an acute angle, the bent part may be formed as a smooth curved surface in order to prevent the generation of the spark discharge in an actual waveguide.

In the microwave heating apparatus of the first embodiment formed as above, the sloping surface 44 is formed in the corner part. Thus, when the microwave is propagated through the inside of the waveguide 32, the microwave radiated from the magnetron 31 is not repeatedly reflected in a complicated manner in the corner part, so that a large propagation loss is prevented. By using the waveguide 32, the microwave from the magnetron 31 can be smoothly propagated to the microwave output part of the waveguide 32. Thus, heating efficiency is increased and an energy saving performance is improved.

In the microwave heating apparatus of the first embodiment, the bending start position Y of the sloping surface 44 in the waveguide 32 has the distance m (about 25 mm) from the center of the antenna 42 in the vertical direction. When the wavelength of the microwave and the distance m are compared, the distance m is a length within a range of 1/4 ± 20% of the wavelength.

In the microwave heating apparatus formed in such a manner, considering a space containing the waveguide 32 and the heating chamber 33, this space is a closed space for the microwave. Thus, the space works as a resonator, and a standing wave is generated even in the waveguide 32. The standing wave always has maximum amplitude (a loop of the standing wave) at a position of the center of the antenna 42, and the maximum amplitude (the loop of the standing wave) is repeated for every 1/2 of the wavelength. Therefore, in the vicinity of the antenna 42, a position of the maximum amplitude next to the position of the center of the antenna 42 is a position distant from the center of the antenna 42 by 1/2 wavelength.

Meanwhile, at the time of resonance, strength of an electric field and a magnetic field is maximum at the position of the maximum amplitude. Thus, it is thought that when the bending start position Y from the vertical surface 43 to the sloping surface 44 is at the position, the propagation loss is increased. In the first embodiment, the bending start position Y of the corner part in which an arrangement angle is changed in the first H surface of the waveguide 32 is a position distant from the center of the antenna 42 by about 1/4 wavelength (the length within a range of 1/4 ± 20% of the wavelength). Therefore, the bending start position Y is just in the middle of the center of the antenna 42 and the position distant from the center of the antenna 42 by 1/2 wavelength. That is, the bending start position Y is just in the middle of the positions of the maximum amplitude, at a position of a node of the standing wave of the minimum amplitude. Thus, the propagation loss can be efficiently suppressed.

It should be noted that the bending start position Y is not necessarily the position distant from the center of the antenna 42 by about 1/4 wavelength. When the bending start position Y is a position distant from the center of the antenna 42 by a distance within a range from 1/8 wavelength to 3/8 wavelength, there is an effect of considerably suppressing the propagation loss.

In the microwave heating apparatus of the first embodiment, the first H surface of the waveguide 32 is formed by connecting the first plate 46 forming the vertical surface 43 and the sloping surface 44, and the bottom plate 50 forming part of the heating chamber 33, and the second H surface, the first E surface, and the second E surface are formed by the second plate body 51. However, the present invention is not limited to such a configuration only, but the pair of H surfaces, the pair of E surfaces, and the short surfaces are formed by appropriately processing desired plate materials in consideration with shapes and configurations thereof.

In the waveguide 32 in the microwave heating apparatus of the first embodiment, by providing the sloping surface 44 in the corner part, the propagation loss in the waveguide can be reduced, and the waveguide can be easily realized with a small number of parts even with a bent shape thereof.

Particularly, by inclining the end 45 on the side of the heating chamber of the first plate 46 more than an inclination angle of the sloping surface 44 so that the bottom surface of the heating chamber 33 is parallel to the bottom plate 50, a joint process is easily performed by the joint means such as the spot welding or the compression joint of the end 45 and the bottom plate 50.

A specific energy saving effect in the microwave oven serving as the microwave heating apparatus of the first embodiment will be described. In order to quantitatively evaluate a microwave oven in which a bent waveguide having no sloping surface such as the waveguide 1A shown in Fig. 29 is used, and the microwave oven serving as the microwave heating apparatus of the first embodiment in which the waveguide having the sloping surface shown in Fig. 1 is used, the present inventors examined annual power consumption amounts thereof. As a result, in a case of the microwave oven in which the waveguide having no sloping surface is used, the annual power consumption amount was 63.73 kWh/year, and in a case of the microwave oven in which the waveguide having the sloping surface is used, the annual power consumption amount was 58.53 kWh/year. It is found that the power consumption amount can be reduced by not less than 5 kWh/year.

It should be noted that although the sloping surface 44 in the corner part of the waveguide 32 of the first embodiment is cut as a flat surface like a chamfer in the microwave heating apparatus of the first embodiment, the present invention is not limited to such a shape but the sloping surface may be formed into a curved surface.

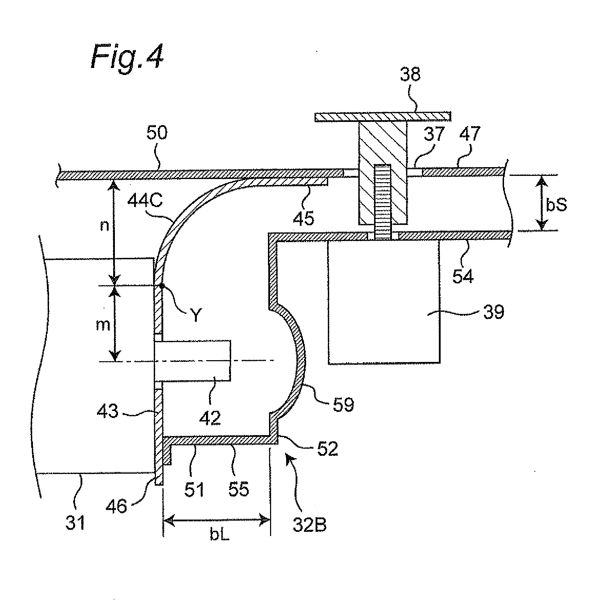

Fig. 4 is a sectional view showing an example in which the sloping surface formed in the corner part of the waveguide 32 is formed into a curved surface. As shown in Fig. 4, a curved sloping surface 44C in the first H surface is formed into a smooth curved surface so as to make the vertical surface 43 and the horizontal surface 47 continuous to each other for shortening the propagation route in a waveguide 32B. With the waveguide 32B formed in such a manner, the microwave is more smoothly propagated, and the propagation loss can be considerably reduced.

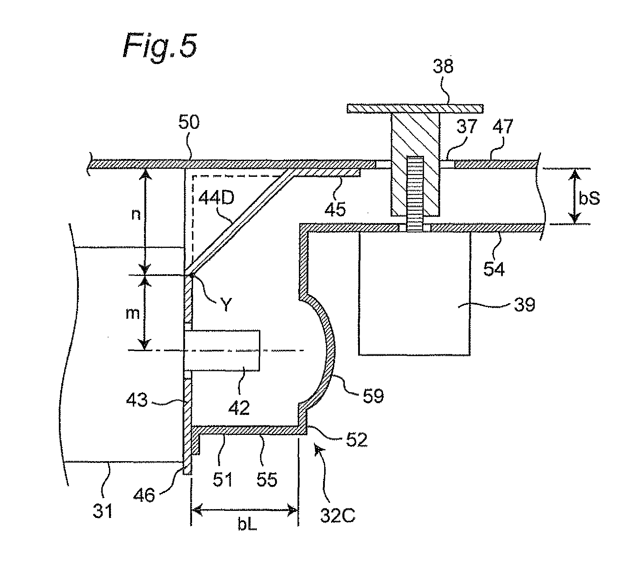

In the waveguide 32 in the microwave heating apparatus of the first embodiment, an example in which the sloping surface 44 is formed in an area ranging over the entire width in the width direction of the first H surface is described. However, the present invention is not limited to such a configuration, but the sloping surface may be formed in a partial area in the width direction of the first H surface. Fig. 5 is a sectional view showing an example in which a sloping surface 44D is formed in part in the width direction of the first H surface in a waveguide 32C. With the waveguide 32C formed in such a manner, structural strength in a part of the sloping surface is increased, structural integration between the heating chamber 33 and the waveguide 32C is easily performed, and the heating apparatus becomes highly reliable.

In the microwave heating apparatus of the first embodiment, a case of providing two rotation antennas 38 is described. However, the number of the rotation antenna is not limited in the present invention. The rotation antenna is not necessarily provided. In such a case, the microwave is directly radiated from an opening provided between the waveguide and the heating chamber.

### (Second Embodiment)

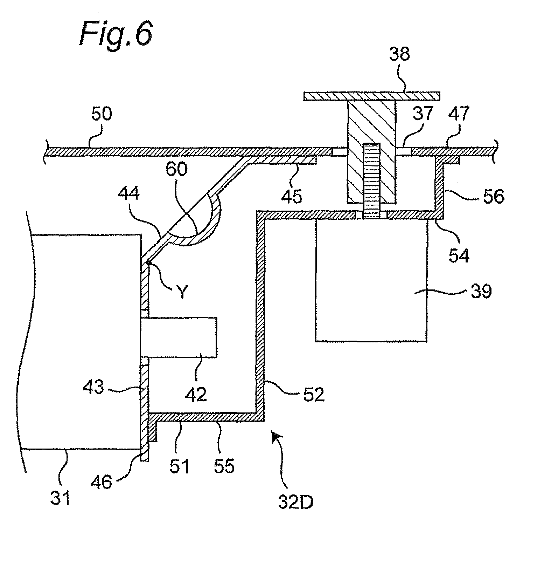

Fig. 6 is a sectional view showing the vicinity of a waveguide in a microwave oven serving as a microwave heating apparatus of a second embodiment according to the present invention.

In the microwave heating apparatus of the second embodiment, different points from the microwave heating apparatus of the first embodiment are one rotation antenna, a shorter length in the propagation direction of the waveguide, and a matching portion 60 provided in the sloping surface 44.

In general, the waveguide is a rectangular parallelepiped, and the propagation direction thereof is straight. In a case where a length in the propagation direction is long, a convex portion serving as a matching portion is sometimes formed at an arbitrary position of the waveguide in order to reduce the propagation loss. However, in a case where the waveguide is very short and formed into a bent shape, it is difficult to form the matching portion in the waveguide.

It is incorrect that the matching portion can be formed in anywhere in the waveguide. In a case where the matching portion is formed at a position close to the antenna 42 of the magnetron 31 for generating the microwave or the rotation antenna 38 for radiating the microwave, there is a fear of the spark discharge. In a case where the matching portion is formed in the vicinity of a joint part between a plate material and a plate material for forming the waveguide, there is a problem that it is difficult to process the waveguide. In a case where the matching portion is formed at a place close to the motor serving as the drive means of the rotation antenna, there is a need for designing the matching portion so as not to disturb attachment of the motor.

In the microwave heating apparatus of the second embodiment, the matching portion is formed in the part of the sloping surface of the waveguide. As shown in Fig. 6, the matching portion 60 is formed in the sloping surface 44 of the first H surface. The matching portion 60 has a concave shape so as to protrude toward the inside of a waveguide 32D. It should be noted that a shape of the matching portion 60 is appropriately changed in accordance with a state between the waveguide 32D and the heating chamber 33, and the matching portion sometimes has a convex shape so as to protrude toward the outside of the waveguide 32D.

In the microwave heating apparatus of the second embodiment, the matching portion 60 is formed in the sloping surface 44 of the waveguide 32D. In the waveguide 32D, the sloping surface 44 does not correspond to the joint part but is formed at a position distant from the antenna 42 and the rotation antenna 38. Thus, the matching portion 60 can be easily formed, and there is no anxiety of the spark discharge between the matching portion 60 and the antennas. Further, even when the matching portion 60 is provided in the sloping surface 44, the matching portion is not disturbing in the microwave heating apparatus.

Since the matching portion 60 is formed in the sloping surface 44, the heating chamber 33 is not influenced. For example, in the configuration of the waveguide 1B as shown in Fig. 30, there is a need for forming the matching portion in the bottom plate 50 forming the bottom surface of the heating chamber 33. However, in a case where the matching portion 60 is formed in the bottom plate 50 in such a manner, the bottom surface of the heating chamber 33 is deformed. Thus, there is a problem that heating distribution in the heating chamber is changed. In a case of designing the heating chamber 33, the designing is more easily performed when the heating distribution in the heating chamber can be determined based on a shape of the heating chamber and a matching state of the waveguide 32D can be determined based on a shape of the matching portion. That is, the designing is easily performed when the shape of the heating chamber and the shape of the matching portion are independent from each other and do not influence each other. In the configuration of the waveguide 1B shown in Fig. 30, even when only the matching state is changed based on a shape of a matching portion 21, the heating distribution in the heating chamber is also changed, and the designing is very difficult. However, in the microwave heating apparatus of the second embodiment, the matching portion 60 is formed in the sloping surface 44. Thus, the shape of the matching portion does not change the shape of the heating chamber 33, and the heating distribution is not influenced. Therefore, the microwave heating apparatus of the second embodiment has a configuration capable of optimizing the heating distribution and the matching state independently from each other, so that the designing is very easily performed.

In the microwave heating apparatus of the second embodiment, the matching portion 60 is formed in part of the sloping surface 44 by the press forming. Therefore, a configuration of the matching portion 60 itself is not complicated, and the matching portion 60 can be extremely easily formed.

It should be noted that although the matching portion 60 of the waveguide 32 in the microwave heating apparatus of the second embodiment has a concave shape by the press forming, the prevent invention is not limited to a concave shape by such a processing method. The matching portion may be formed by jointing a semi-spherical or cylindrical metal to the waveguide by welding.

In the microwave heating apparatus of the second embodiment, the vertical surface 52 of the second plate 51 is formed as a flat surface. The convex portion 59 expanded outward of the first embodiment shown in Fig. 2 is not formed in this vertical surface 52. This is because the vertical surface 52 ensures the distance from the front end of the antenna 42 so that the spark discharge is not generated.

It should be noted that although the second H surface is formed by the vertical surface 52 and the horizontal surface 54 parallel to the bottom surface of the heating chamber 33, a sloping surface may be formed between the vertical surface 52 and the horizontal surface 54 so as to face the sloping surface 44 of the first H surface. By forming the sloping surface in the second H surface so as to face the first H surface, an energy loss in the propagation of the microwave can be reduced.

In the waveguide 32D shown in Fig. 6, the bent part is drawn to have an acute angle. However, the bent part may be formed as a smooth curved surface in order to prevent the generation of the spark discharge in an actual waveguide.

### (Third Embodiment)

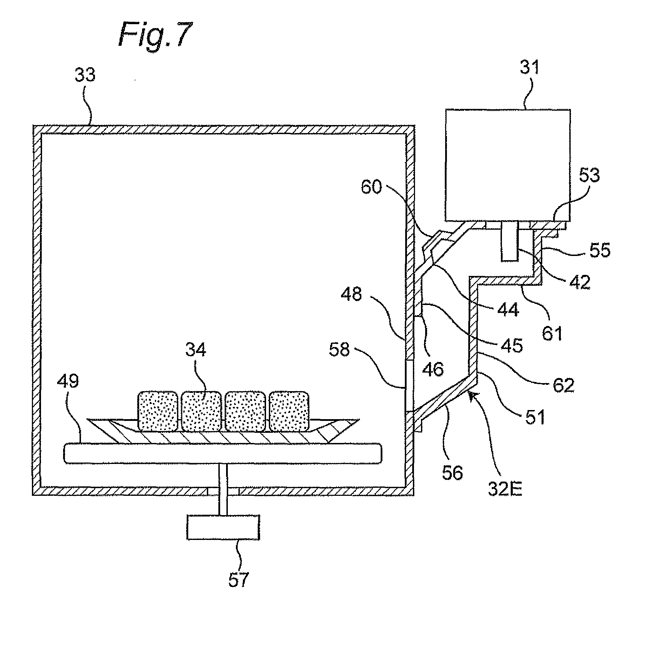

Fig. 7 is a front sectional view showing a schematic configuration of a microwave oven serving as a microwave heating apparatus of a third embodiment according to the present invention. In the microwave oven shown in Fig. 7, a door (not shown) for bringing the object to be heated in and out of the heating chamber is provided on the near side.

In the microwave heating apparatus of the third embodiment, a waveguide 32E is arranged on the right side of the heating chamber 33, and the microwave is radiated from the waveguide 32E to the heating chamber 33 not by the rotation antenna but by an opening 58 formed in a side surface 48 of the heating chamber 33. It should be noted that in the microwave heating apparatus of the third embodiment, a turntable 49 for turning the food is provided in place of the rotation antenna.

In Fig. 7, the microwave oven serving as the microwave heating apparatus of the third embodiment is provided with the magnetron 31 serving as the representative microwave generation means, the waveguide 32E for propagating the microwave radiated from the magnetron 31, the heating chamber 33 connected to the left side of the waveguide 32E, the turntable 49 attached inside the heating chamber 33 having an upper surface on which the food 34 is rested, and a motor 57 serving as drive means for rotating and driving the turntable 49. The microwave is radiated from the waveguide 32E to the heating chamber 33 via the relatively large opening 58.

Next, the waveguide 32E in the microwave heating apparatus of the third embodiment will be described.

With the waveguide 32E having a rectangular section orthogonal to the propagation directions, the propagation direction of the microwave input part in which the antenna 42 of the magnetron 31 is provided and the propagation direction of the microwave output part in which the opening 58 is formed make a substantially right angle in the waveguide 32E. The waveguide 32E has a pair of H surfaces serving as the magnetic field surfaces and facing each other (a first H surface, a second H surface), and a pair of E surfaces serving as the electric field surfaces and facing each other (a first E surface, a second E surface).

As shown in Fig. 7, the first H surface is formed by a horizontal surface 53 into which the antenna 42 of the magnetron 31 is inserted, the sloping surface 44 obliquely arranged so as to make a predetermined angle with this horizontal surface 53, a vertical surface of the end 45 formed so as to make a predetermined angle with this sloping surface 44 and extend in the vertical direction, and a vertical surface serving as part of the side surface 48 of the heating chamber 33. The second H surface is formed by a horizontal surface 61 facing the front end of the antenna 42 of the magnetron 31, and a vertical surface 62 orthogonal to the horizontal surface 61 and parallel to the side surface of the heating chamber 33.

In the waveguide 32E of the third embodiment, as shown in Fig. 7, the first plate 46 forms the horizontal surface 53, the sloping surface 44, and the vertical surface of the end 45 of the first H surface. A vertical surface of the first H surface includes the vertical surface of the end 45 formed in parallel to the side surface 48 of the heating chamber 33 in the first plate 46, and the vertical surface serving as part of the side surface 48 of the heating chamber 33.

In the first plate 46, the end 45 on the side of the heating chamber of the sloping surface 44 is bent in the vertical direction so as to be parallel to the side surface 48 of the heating chamber 33. The end 45 is fixed to the side surface 48 by the joint means such as the spot welding and the compression joint.

Meanwhile, the second H surface is formed by bending the second plate 51. The second plate 51 is bent so as to form the E surfaces serving as the both sides of the second H surface, and the short surfaces 55, 56 serving as the both end surfaces of the waveguide 32E.

The sloping surface 44 is formed in the corner part connecting the microwave input part in which the antenna 42 of the magnetron 31 is provided and the microwave output part in which the opening 58 is formed in the first H surface of the waveguide 32E. In the waveguide 32E of the third embodiment, the corner part in the waveguide 32E is obliquely cut for shortening the propagation route of the microwave in comparison to the configurations of the waveguides 1A, 1B shown in Figs. 29 and 30.

In the microwave heating apparatus of the third embodiment, the matching portion 60 is formed in the sloping surface 44 of the waveguide 32E. In the waveguide 32E of the third embodiment, the matching portion 60 has a convex shape protruding toward the outside of the waveguide 32E. In the configuration of the microwave heating apparatus of the third embodiment, since there is an extra space on the upper side of the sloping surface 44, the matching portion 60 formed into a convex shape by the press forming can be surely and easily arranged.

As described above, in the configuration that the antenna 42 of the magnetron and the opening 58 serving as a radiation port of the microwave to the heating chamber 33 are formed in the first H surface of the bent waveguide 32E, the matching portion 60 having a desired shape can be easily and surely formed by deforming part of the wall surface of the waveguide 32E without influencing the heating distribution of the heating chamber 33.

### (Fourth Embodiment)

A microwave heating apparatus of a fourth embodiment has substantially the same configuration as the configuration of the microwave heating apparatus of the first embodiment described with reference to Figs. 1 and 2, and a technological idea for the waveguide will be described with specific numerical values.

In the waveguide 1A with the configuration shown in Fig. 29, the microwave radiated from a magnetron 14 serving as the microwave generation means is reflected in a complicated manner in the corner part so as to generate the propagation loss and decrease the heating efficiency, and hence the energy saving performance is not improved. In a case where an antenna 2 of the magnetron 14 is inserted into the waveguide, a length c of the general antenna 2 in the waveguide is about 25 to 30 mm. A distance d from a front end of the antenna 2 to a surface facing the front end of the antenna 2 (a second H surface) in the waveguide 1A is often ensured to be about not less than 5 mm in order to prevent the generation of the spark discharge and the like. In a case where the present inventors formed the waveguide with the configuration shown in Fig. 29, the height bL of the microwave input part in which the antenna 2 of the magnetron 14 is provided (the distance between the first H surface and the second H surface (= c + d)) was about 37 mm.

In the configuration of the waveguide 1A shown in Fig. 29, the present inventors make the height bS of the microwave output part in which a rotation antenna 11 is provided about 16 mm in order to ensure a space in which a motor 4 is arranged. Therefore, in the waveguide manufactured by the present inventors, a ratio between the height bS of the microwave output part and the height bL of the microwave input part was 16 mm : 37 mm = 1 : 2.3. With a microwave oven in which the waveguide formed by this ratio is used, the energy saving performance of the microwave (also called annual power consumption efficiency or the annual power consumption amount) with an output of 800 W was 65.02 kWh/year. This numerical value is not very preferable.

With the microwave heating apparatus of the fourth embodiment according to the present invention, even in a case of using the bent waveguide, the reduction in the propagation loss, and the improvement of the heating efficiency and the energy saving performance are achieved.

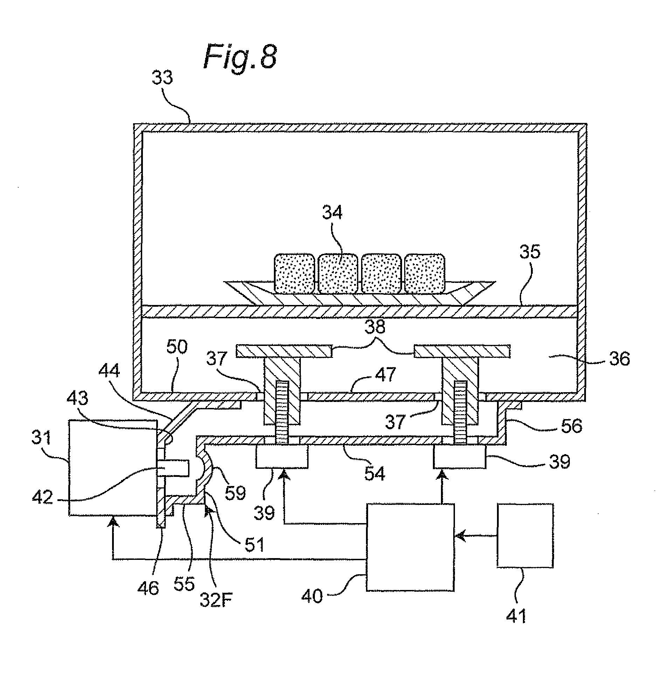

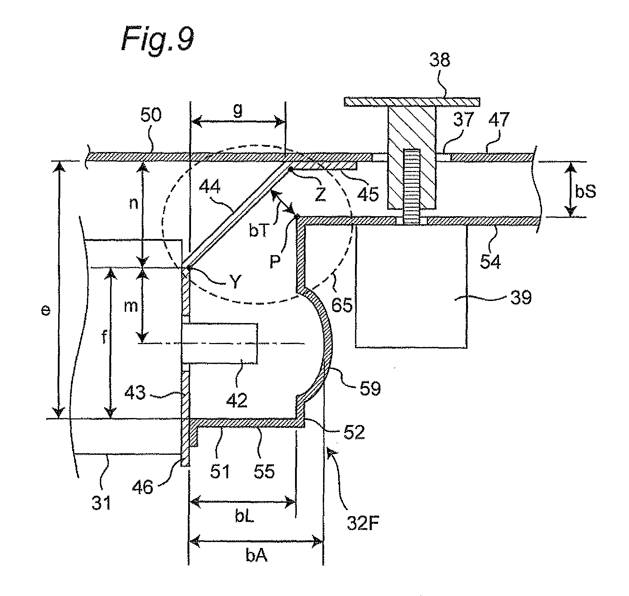

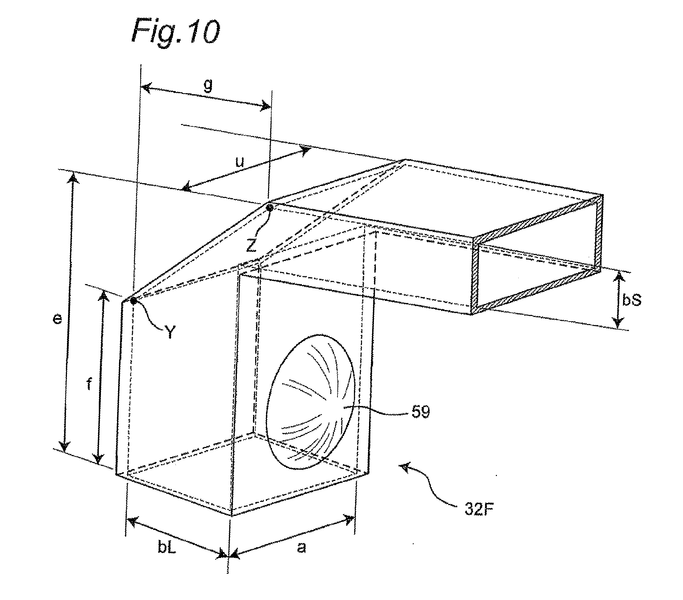

Fig. 8 is a front sectional view showing a schematic configuration of a microwave oven serving as the microwave heating apparatus of the fourth embodiment according to the present invention. In the microwave oven shown in Fig. 8, a door (not shown) for bringing the object to be heated in and out of the heating chamber is provided on the near side. Fig. 9 is a sectional view showing a configuration in the vicinity of a waveguide in the microwave heating apparatus of the fourth embodiment. Fig. 10 is a perspective view showing only the waveguide in the microwave heating apparatus of the fourth embodiment.

It should be noted that in the fourth embodiment, constituent elements having substantially the same function as the constituent elements used in the microwave heating apparatus of the first embodiment will be given the same reference numerals, and characteristic parts will be described in detail.

In Fig. 8, the microwave oven serving as the microwave heating apparatus of the fourth embodiment is provided with the magnetron 31 serving as the microwave generation means, a waveguide 32F for propagating the microwave radiated from the magnetron 31, the heating chamber 33 provided in an upper part of the waveguide 32F to which the microwave from the waveguide 32F is radiated, the tray base 35 fixed into the heating chamber 33 on which the food 34 and the like are rested, the rotation antennas 38, 38 arranged in the antenna space 36 formed on the lower side of the tray base 35, the motors 39, 39 serving as the drive means for driving the rotation antennas 38, 38, the control unit 40 for controlling rotation and stoppage of the motors 39, 39, and the setting unit 41 in which the user sets a heating condition or the like.

The microwave oven serving as the microwave heating apparatus of the fourth embodiment has substantially the same configuration as the configuration of the microwave oven serving as the microwave heating apparatus of the first embodiment. Thus, a detailed configuration will not be given.

The waveguide 32F used in the microwave oven serving as the microwave heating apparatus of the fourth embodiment will be described.

With the waveguide 32F having a rectangular section orthogonal to the propagation directions, the propagation direction of the microwave input part in which the antenna 42 of the magnetron 31 is provided and the propagation direction of the microwave output part in which the rotation antennas 38, 38 are provided make a substantially right angle. The waveguide 32F has a pair of H surfaces facing each other (a first H surface, a second H surface), and a pair of E surfaces facing each other orthogonal to the H surfaces (a first E surface, a second E surface).

As shown in Fig. 9, the first H surface in the waveguide 32F is formed by jointing the first plate 46 forming the vertical surface 43 into which the antenna 42 of the magnetron 31 is inserted, the sloping surface 44, and a horizontal surface of the end 45, and the bottom plate 50 forming the bottom surface of the antenna space 36 in the heating chamber 33. In the waveguide 32F of the fourth embodiment, the corner part in the waveguide is obliquely cut for shortening the propagation route of the microwave in comparison to the configurations of the waveguides 1A, 1B shown in Figs. 29 and 30.

The end 45 on the side of the heating chamber of the sloping surface 44 in the first plate 46 is horizontally bent so as to be parallel to the bottom plate 50. The end 45 is jointed to the bottom plate 50 by the joint means such as the spot welding and the compression joint.

In the waveguide 32 in the microwave heating apparatus of the fourth embodiment, the bending start position Y of the sloping surface 44 in the first H surface has the distance m from the center of the antenna 42 in the vertical direction of 25 mm. In comparison to the wavelength of the microwave (about 120 mm) to be used in the microwave oven, the distance m is the distance of about 1/4 wavelength. Herein, about 1/4 wavelength is within a range of 1/4 ± 20% of the wavelength of the microwave to be used.

The distance n from the bending start position Y to the bottom plate 50 forming the bottom surface of the heating chamber 33 is similarly about 25 mm. It should be noted that in the waveguide 32F of the fourth embodiment, although the angle made by the sloping surface 44 and the bottom surface of the heating chamber 33 is 45 degrees, this angle may be within a range from 30 to 60 degrees.

The second H surface in the waveguide 32F is formed by bending the second plate 51. The second plate 51 is bent so as to form the E surfaces serving as the both sides of the second H surface, and the short surfaces serving as the end surfaces of the waveguide 32.

Basic dimensions of the waveguide 32F of the fourth embodiment will be described with reference to the perspective view shown in Fig. 10.

In the waveguide 32F, the height bL of the microwave input part in which the antenna 42 of the magnetron 31 is provided is 32 mm, and the height bS of the microwave output part in which the rotation antennas 38 are provided is 16 mm.

The convex portion 59 formed in the vertical surface of the second H surface by the press forming protrudes outward of the waveguide 32F in order to ensure a desired distance between the front end of the antenna 42 and the facing vertical surface 52 and hence prevent the generation of the spark discharge. The convex portion 59 is formed so as to have a distance of at least 5 mm from the front end of the antenna 42.

In the waveguide 32F of the fourth embodiment, the width a (refer to Fig. 10) is 85 mm. In the second H surface of the waveguide 32F, the convex portion 59 is formed in a center of the waveguide 32 in the width direction at a part facing the front end of the antenna 42 of the magnetron 31. Therefore, in the waveguide 32F of the fourth

embodiment, although the antenna 42 is provided, the height bL of the microwave input part in which the antenna 42 is provided can be set to be small.

Actual major dimensions of the waveguide 32F of the fourth embodiment will be described by using dimension symbols a, bL, bS, bA, e, f, and g shown in Figs. 9 and 10 (a = 85 mm, bL = 32 mm, bS = 16 mm, bA = 37 mm, e = 70 mm, f = 45 mm, and g = 32 mm). A shape of a corner part 65 (an area surrounded by a broken line in Fig. 9) in the waveguide 32F is specified by these dimensions.

The waveguide 32F in the microwave heating apparatus of the fourth embodiment formed as above has the corner part 65 bent so that the first H surface in which the antenna 42 of the magnetron 31 and the rotation antennas 38 are provided serves as the outer side, and the second H surface facing the first H surface serves as the inner side. The ratio between the height bS on the side of the heating chamber of the corner part 65 (the microwave output part) and the height bL on the side of the microwave generation means of the corner part 65 (the microwave input part) is 16 mm : 32 mm = 1 : 2.

As described above, in the configuration of the waveguide 1A shown in Fig. 29, the ratio between the height bS of the microwave output part and the height bL of the microwave input part is 16 mm : 37 mm = 1 : 2.3. However, the ratio in a case of the waveguide 32F of the fourth embodiment is 1 : 2, which is a different ratio. With the microwave heating apparatus of the fourth embodiment in which the waveguide 32F formed by this ratio is used, the energy saving performance of the microwave (also called the annual power consumption efficiency or the annual power consumption amount) with an output of 800 W is 58.98 kWh/year. In comparison to the fact that the energy saving performance of the microwave with an output of 800 W is 65.02 kWh/year with the microwave heating apparatus in which the waveguide 1A formed by the ratio of 1 : : 2.3 is used, the microwave heating apparatus of the fourth embodiment is remarkably improved. Therefore, it is found that in the waveguide, the ratio (height bS of microwave output part) / (height bL of microwave input part) is preferably within a range from 1/1 to 1/2.

By the ratio between the heights of the E surfaces in front and rear parts of the corner part 65 (the ratio between the height bS of the microwave output part and the height bL of the microwave input part) within a range of 1 : 1 to 2 in the waveguide 32F, the microwave radiated from the microwave generation means is not reflected in a complicated manner in the corner part 65, so that the propagation loss can be reduced and the microwave is smoothly propagated to a terminal end of the waveguide 32F. As a result, by using the waveguide 32F formed by the above ratio in the microwave heating apparatus, the decrease in the heating efficiency can be prevented and the energy saving performance can be improved.

Particularly, in the waveguide 32F of the fourth embodiment, by setting the ratio between the height bS of the microwave output part (the height of the E surfaces) and the height bL of the microwave input part (the height of the E surfaces) to substantially 1 : 2, the microwave radiated from the microwave generation means is smoothly propagated in the corner part 65, so that the propagation loss can be reduced. Additionally, since the height bL of the microwave input part (the height of the E surfaces) can be set to be a maximum length within a range of the ratio (1 : 1 to 1 : 2), the distance between the front end of the antenna 42 and the facing H surface can be set to be large, so that the loss in the vicinity of the antenna 42 can be prevented. As a result, in the microwave heating apparatus of the fourth embodiment, in comparison to a case where the ratio is 1 : 1, the further decrease in the heating efficiency can be prevented and the energy saving performance can be further improved.

In the waveguide 32F of the fourth embodiment, the height bS of the microwave output part (the height of the E surfaces) is set to be 16 mm, and this length of 16 mm is substantially 1/8 of 120 mm = the wavelength λ of the microwave of the microwave oven. The height bL of the microwave input part (the height of the E surfaces) in the waveguide 32F is set to be 32 mm, and this length of 32 mm is substantially 1/4 of 120 mm = the wavelength λ.

In the waveguide 32F of the fourth embodiment, by forming the waveguide with the above dimensions, the ratio between the E surface height bS of the waveguide 32F and the E surface height bL of the waveguide 32F can be set to be within a range from 1 : 1 to 1 : 2, and the condition bS < λ/2 serving as the condition of the E surface height bS of the waveguide 32F and the condition bL < λ/2 serving as the condition of the E surface height bL of the waveguide 32F are both satisfied. Therefore, the microwave can be surely propagated in a mode called a TE10 mode with the most compact configuration regarding the propagation of the microwave by the waveguide 32F.

The convex portion 59 protruding outward is formed in the second H surface of the waveguide 32F at the part facing the front end of the antenna 42, and a maximum height bA from the first H surface to the convex portion 59 is 37 mm. This height is the same as the E surface height bL of the microwave input part in the waveguide 1A shown in Fig. 29. In such a manner, in the waveguide 32F of the fourth embodiment, while ensuring a desired distance between the front end of the antenna 42 and the wall surface of the waveguide facing the front end, an increase in the E surface height bL of the microwave input part in the waveguide 32F can be prevented.

In the waveguide 32F of the fourth embodiment formed in such a manner, while the distance between the front end of the antenna 42 and the facing wall surface of the H surface is large, the E surface height bL of the microwave input part in the waveguide 32F can be as small as 32 mm. Therefore, the ratio between the E surface height bS of the microwave output part in the waveguide 32F and the E surface height bL of the microwave input part in the waveguide 32F can be easily set to be within a range from 1 : 1 to 1 : 2.

As described above, in the microwave heating apparatus of the fourth embodiment, while preventing the loss in the antenna 42 for introducing the microwave, the propagation loss in the corner part 65 can also be prevented. As a result, in the microwave heating apparatus of the fourth embodiment, even by using the bent waveguide 32F, the decrease in the heating efficiency can be prevented and the energy saving performance can be improved.

In the microwave heating apparatus of the fourth embodiment, the sloping surface 44 for shortening the propagation route is provided in the corner part 65. Thus, an increase in size of the E surfaces in the corner part 65 is prevented. For example, a maximum E surface length bT in the corner part shown in Fig. 29 described above (a length from a corner of the first H surface to a corner of the second H surface) is 40 mm in fact. The E surface length bT in the corner part 65 in the waveguide 32F of the fourth embodiment is small, and the length can be set to be smaller than the E surface height bL of the microwave input part in the waveguide 32F.

In the waveguide 32F formed in such a manner, an increase in the maximum E surface length (bT) in the corner part 65 bent at a right angle can be prevented, and the maximum E surface length (bT) in the corner part 65 can be set to be close to the E surface heights bS, bL in the front and rear parts of the corner part 65. Therefore, in the microwave heating apparatus of the fourth embodiment in which the waveguide 32F is used, the propagation loss due to the reflection of the microwave radiated from the microwave generation means in a complicated manner in the corner part 65 can be prevented, so that the microwave can be smoothly propagated to the output part of the waveguide. Therefore, in the microwave heating apparatus of the fourth embodiment, the decrease in the heating efficiency can be prevented and the energy saving performance can be improved.

The sloping surface 44 of the first H surface in the waveguide 32F is cut as a flat surface like a chamfer in the fourth embodiment. However, the present invention is not limited to such a configuration. The sloping surface may be formed into a curved surface by a radiusing process. Other bent parts in the waveguide 32F may be formed into a curved surface by the radiusing process, so that a discharge phenomenon is further suppressed.

It should be noted that in the microwave heating apparatus of the fourth embodiment, a case of providing two rotation antennas is described. However, the number of the rotation antenna may be one. Alternatively, even in a case where no rotation antenna is provided and the microwave is radiated from the opening provided between the waveguide and the heating chamber, the same effects can be obtained by using the configuration of the waveguide 32F described in the fourth embodiment.

### (Fifth Embodiment)

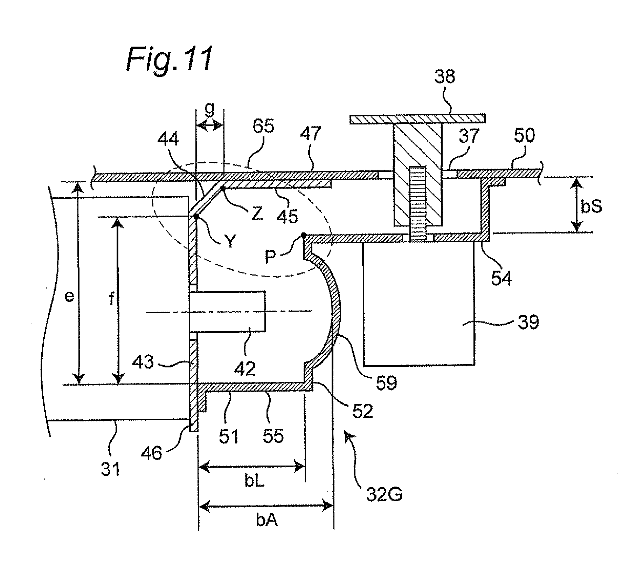

Fig. 11 is a sectional view showing the vicinity of a waveguide in a microwave oven serving as a microwave heating apparatus of a fifth embodiment according to the present invention.

In the microwave heating apparatus of the fifth embodiment, one rotation antenna is provided. In the microwave heating apparatus of the fifth embodiment, the shape of the sloping surface in the waveguide is formed to be small, so that the magnetron 31 is brought close to the heating chamber. In the following description of the fifth embodiment, constituent elements having the same function and configuration as the microwave heating apparatus of the first to fourth embodiments will be given the same reference numerals, and descriptions thereof will not be given.

In a waveguide 32G of the microwave heating apparatus of the fifth embodiment, a major dimension different from the waveguide 32E of the microwave heating apparatus of the fourth embodiment is a length e between an upper surface (an outer surface) of the waveguide 32G jointed to the bottom surface of the heating chamber and a lower surface (an inner surface) of the one end surface 55 (the short surface) of the waveguide 32G, which is set as e = 54 mm. This dimension is the same length as the waveguide 1A shown in Fig. 29 described above. A length g of the sloping surface 44 in the horizontal direction is set as g = 10 mm. The length g of the sloping surface 44 in the horizontal direction is a horizontal distance from the bending start position Y in the inner surface of the waveguide 32G to a bending end position Z where the inclination of the sloping surface 44 ends and the surface becomes horizontal.

With the microwave oven serving as the microwave heating apparatus of the fifth embodiment formed as above, the energy saving performance of the microwave (also called the annual power consumption efficiency or the annual power consumption amount) with an output of 800 W is 57.54 kWh/year. In a case of the microwave oven in which the waveguide 1A with the configuration shown in Fig. 29 is used, the energy saving performance is 65.02 kWh/year. In a case of the microwave oven in which the waveguide 1B with the configuration shown in Fig. 30 is used, the energy saving performance is 63.73 kWh/year. With the microwave heating apparatus of the fourth embodiment, the energy saving performance is 58.98 kWh/ycar. In such a manner, in the microwave heating apparatus of the fifth embodiment, an excellent energy saving performance is obtained.

### (Sixth Embodiment)

In general, in order to save energy, downsizing of the waveguide is an important object for reducing the loss in the wall surface of the waveguide. A shape of the wall surface of the waveguide is also an important object in order to save the energy. When the combination holes 37 serving as openings are formed in a flat part in the wall surface of the waveguide as in the waveguide of the first to fifth embodiments, the direction of the microwave to be propagated from the waveguide into the heating chamber is slightly changed. As a result, distribution of the microwave to be radiated from the waveguide into the heating chamber via the rotation antennas and the combination holes is changed. Particularly, when the waveguide is short in a case of one rotation antenna, the shorter waveguide accelerates the tendency. Therefore, for example, in a case of one rotation antenna, the waveguide cannot be carelessly designed to be short.

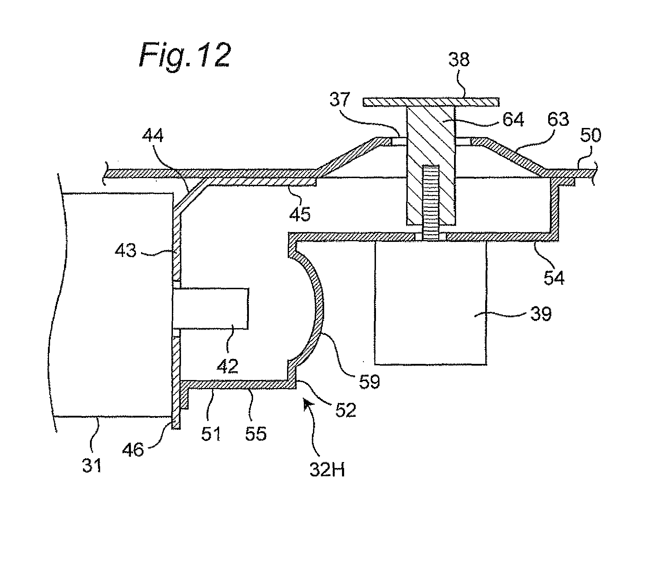

Thus, it is thought that an outer peripheral part of the combination hole serving as the opening protrudes toward the side of the heating chamber to guide the radiated microwave, so that the loss of the microwave radiated from the waveguide to the heating chamber is reduced. Fig. 12 is a sectional view showing an example in which a radiation guide 63 is formed by expanding an outer peripheral part of the combination hole 37 in the first H surface so that the outer peripheral part protrudes toward the side of the heating chamber in the configuration of the waveguide 32 of the first embodiment. As shown in Fig. 12, in a case where the radiation guide 63 is formed in the outer peripheral part of the combination hole 37, it is thought that the microwave propagated through the inside of the waveguide is organized in the radiation guide 63 before reaching the combination hole 37. Accordingly, in a case where the radiation guide 63 is formed in the outer peripheral part of the combination hole 37, the direction of the microwave is not largely changed in the combination hole 37, and a change in the distribution of the microwave in the heating chamber due to a difference in the shape of the waveguide is small.

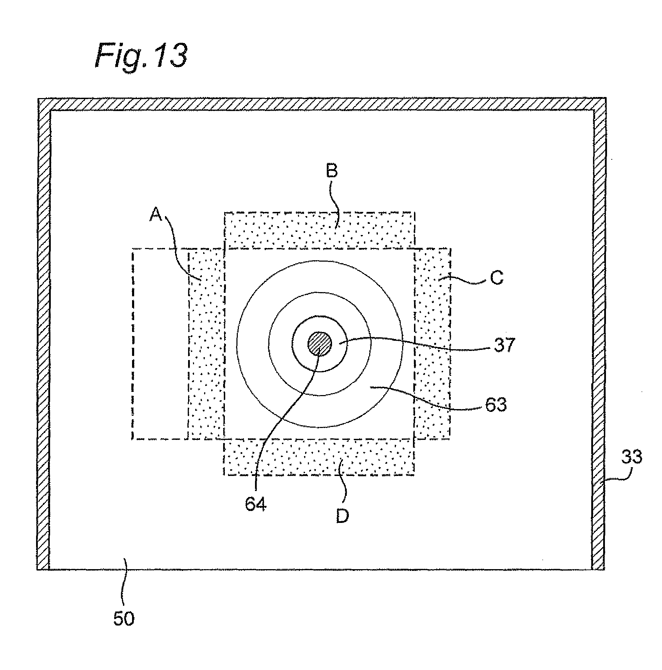

However, with the configuration or a waveguide 32H shown in Fig. 12, the large radiation guide 63 is formed in the outer peripheral part of the combination hole 37. Thus, there is a problem that a joint part between the bottom plate 50 of the heating chamber 33 and the first plate 46 forming the first H surface has to be arranged on the further outer side of the radiation guide 63. Fig. 13 is a plan view of the bottom plate 50 of the heating chamber 33 provided with the waveguide 32H showing a section of a drive shaft 65 of the rotation antenna 38. In Fig. 13, the joint part between the bottom plate 50 of the heating chamber 33 and the first plate 46 is shown as an area A, and joint parts between the bottom plate 50 and the second plate 51 are shown as areas B, C, D. As shown in Fig. 13, there is a need for arranging the joint parts between the bottom plate 50 of the heating chamber 33 and the first plate 46 or the second plate 51 (the areas A, B, C, D) on the further outer side of the radiation guide 63 which is on the outer side of the combination hole 37. The formation of the radiation guide 63 in such a manner works against the downsizing of the waveguide and enlarges the waveguide. As a result, in a case of the waveguide having the radiation guide, it is difficult to reduce the propagation loss in the wall surface of the waveguide and to further improve the energy saving performance.

A microwave heating apparatus of a sixth embodiment according to the present invention is to propose a configuration that the size of the waveguide is decreased as much as possible even in the configuration of the waveguide in which the radiation guide is formed in the outer peripheral part of the combination hole, so that the propagation loss in the wall surface of the waveguide is reduced and the energy saving performance is improved.

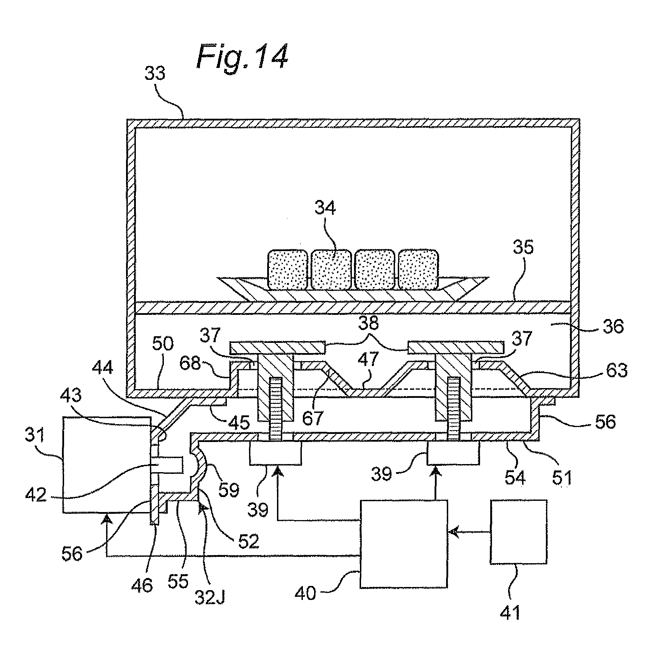

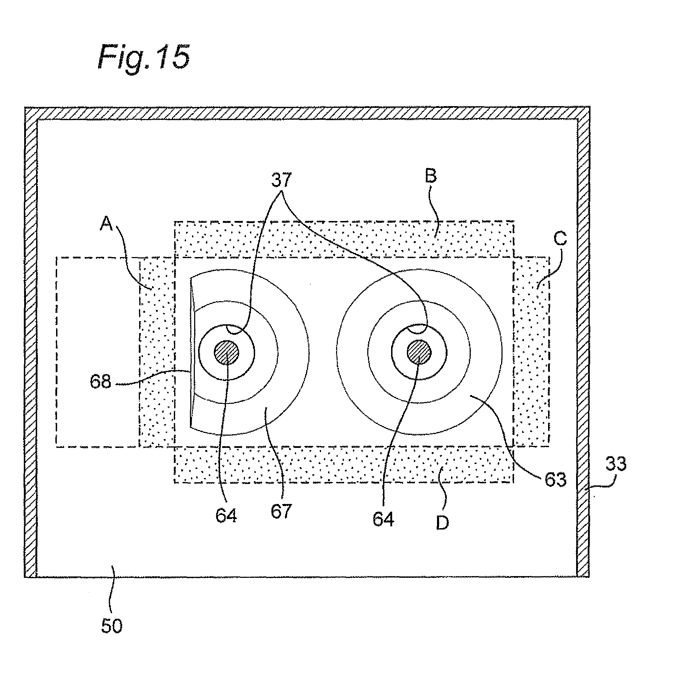

Fig. 14 is a sectional view showing a schematic configuration of a microwave oven serving as the microwave heating apparatus of the sixth embodiment according to the present invention. In Fig. 14, the near side is the front side where a door for bringing the food 34 serving as the object to be heated in and out of the heating chamber 33 is provided. Fig. 15 is a plan view of the bottom plate 50 of the heating chamber 33. In Fig. 15, the rotation antenna 38 is omitted, and a section of the drive shaft 64 thereof is shown. Fig. 15 shows the joint part between the bottom plate 50 of the heating chamber 33 and the first plate 46 as the area A and the joint parts between the bottom plate 50 and the second plate 51 as the areas B, C, D.

As shown in Fig. 14, in the microwave oven serving as the microwave heating apparatus of the sixth embodiment, the microwave radiated from the magnetron 31 serving as the microwave generation means is propagated through a waveguide 32J and guided into the heating chamber 33 connected to an upper part of the waveguide 32J as well as the first embodiment. The tray base 35 is fixed to the inside of the heating chamber 33, and the food 34 and the like are rested on the tray base 35. The antenna space 36 in which the two rotation antennas 38, 38 are provided is formed on the lower side of the tray base 35. In the heating chamber 33, the two combination holes 37, 37 are formed in the bottom plate 50 at the positions distant from the center of the heating chamber 33 by a substantially equal distance, and the two rotation antennas 38, 38 inside the antenna space 36 are rotated around the combination holes 37, 37 by drive of the motors 39, 39 serving as the drive means. The rotation and the stoppage of the motors 39, 39 for driving the rotation antennas 38, 38 are controlled by the control unit 40.

The setting unit 41 is provided in the microwave oven serving as the microwave heating apparatus of the sixth embodiments, so that the user can select the cooking menu in accordance with the food or the cooking method. In the microwave oven, based on the selection result of the user, the control unit 40 controls the magnetron 31 so as to generate and stop the microwave, and also controls the motors 39, 39 so as to control the rotation and the stoppage of the rotation antennas 38, 38.

Hereinafter, the waveguide 32J used in the microwave oven serving as the microwave heating apparatus of the sixth embodiment will be described.

The waveguide 32J of the sixth embodiment is formed by providing the radiation guide having a specific shape in the waveguide 32 of the first embodiment. Therefore, in description of the waveguide 32J of the sixth embodiment, different configurations from the waveguide 32 of the first embodiment will be described in detail, and similar configurations will be supported by the description of the first embodiment.

With the waveguide 32J of the sixth embodiment having a rectangular section orthogonal to the propagation directions, the propagation direction of the microwave input part in which the antenna 42 of the magnetron 31 is provided and the propagation direction of the microwave output part in which the two rotation antennas 38, 38 are provided make a substantially right angle similar to the waveguide 32 of the first embodiment. The waveguide 32J has a pair of H surfaces serving as the magnetic field surfaces and facing each other (a first H surface, a second H surface), and a pair of E surfaces serving as the electric field surfaces and facing each other (a first E surface, a second E surface).

In the waveguide 32J of the sixth embodiment, the first plate 46 forms the vertical surface 43 and the sloping surface 44 of the first H surface, and the bottom plate 50 of the heating chamber 33 forms a horizontal part of the first H surface (including a part of the radiation guide). The end 45 on the side of the heating chamber of the sloping surface 44 in the first plate 46 is horizontally bent so as to be jointed to the bottom plate 50. The end 45 is fixed to the bottom plate 50 by the joint means such as the spot welding and the compression joint.

Meanwhile, the second H surface is formed by bending the second plate 51. The second plate 51 is bent so as to form the E surfaces serving as the both sides of the second H surface, and the short surfaces 55, 56 serving as the end surfaces of the waveguide 32F.

In the microwave heating apparatus of the sixth embodiment, radiation guides 63, 67 are formed on the outer side of the combination holes 37, 37 of the bottom plate 50 of the heating chamber 33. In Fig. 15, the first radiation guide 63 formed on the outer side of the right combination hole 37 is formed on the outer side of the entire circumference of the combination hole 37 and expanded into an annular shape around the combination hole 37 so as to protrude toward the side of the heating chamber. Meanwhile, the second radiation guide 67 formed on the outer side of the left combination hole 37 in Fig. 15 has a shape so that part of an annular shape is cut out, that is, a shape so that a part close to the area A of the joint part between the bottom plate 50 of the heating chamber 33 and the first plate 46 is cut out.

The first radiation guide 63 and the second radiation guide 67 have larger outer shapes than the combination holes 37, and function as guides for propagating the microwave in the waveguide 32J to the heating chamber 33. By forming the first radiation guide 63 and the second radiation guide 67 in the waveguide 32J, the microwave can be smoothly propagated from the waveguide 32J to the heating chamber 33. In the waveguide 32J, the microwave is once organized in the first radiation guide 63 and the second radiation guide 67 before reaching the combination holes 37, 37. Thus, the propagation directions of the microwave are not largely changed and stabilized in the combination holes 37, 37. Therefore, even when the shape of the waveguide is more or less changed, the change in the distribution of the microwave in the heating chamber 33 is small. Thus, the shape of the waveguide can be easily and highly reliably changed.

In the microwave heating apparatus of the sixth embodiment, the plates forming the waveguide 32J are jointed to each other by the spot welding or the compression joint. Thus, in Fig. 15, the joint parts of the plates are shown as the joint areas A, B, C, D. It should be noted that in the plan view of the bottom plate 50 in Fig. 15, the rotation antennas 38 are omitted and sections of the drive shafts 64 are shown in centers of the combination holes 37, 37 for simplifying the figure.

As shown in Fig. 15, the first radiation guide 63 on the right side surrounded by the joint areas B, C, D in the bottom plate 50 of the heating chamber 33 is formed by expanding the outer peripheral part of the combination hole 37 up to the side of the heating chamber and has a substantially annular shape around the combination hole 37. That is, the joint areas B, C, D are formed in an outer peripheral part of the first radiation guide 63.

Meanwhile, a cut surface 68 is formed in the second radiation guide 67 close to the joint area A, and the second radiation guide 67 has a shape so that a cut-out part is formed in an annular shape. As shown in Fig. 15, the second radiation guide 67 has not an annular shape but a shape so that one part of the second radiation guide 67 on the left side of the combination hole 37 is cut out, that is, a substantially D shape in a plan view. In such a manner, the second radiation guide 67 has the cut surface 68, and a horizontal surface is made in the vicinity of the combination hole 37 by the cut surface 68. Therefore, the joint area A between the first plate 46 and the bottom plate 50 can be brought close to the combination hole 37. In comparison to the configuration shown in Fig. 12, the size of the waveguide can be decreased. In a case of such a configuration, the inclination of the sloping surface 44 can be reduced, so that the microwave is smoothly propagated, and the propagation route of the microwave is shortened. Thus, the size of the waveguide can be decreased.

As described above, even when the second radiation guide 67 has a shape so that part of an annular shape in a plan view is cut out, the second radiation guide 67 still holds the guide function for propagating the microwave in the waveguide 32J to the heating chamber 33.

As described above, in the microwave heating apparatus of the sixth embodiment according to the present invention, by forming the modified radiation guide in an outer part of the combination hole 37 of the bottom plate 50 of the heating chamber 33, the joint area A can be brought close to the combination hole 37. As a result, the size of the waveguide 32J can be decreased. Thus, the propagation loss in the wall surface of the waveguide can be reduced and the energy saving performance can be improved.

In the microwave heating apparatus of the sixth embodiment, the second radiation guide 67 has a substantially D shape in a plan view. Thus, the joint area A can be brought close to an edge of a straight part of the D shape. In general, the section of the waveguide for the microwave oven orthogonal to the propagation direction is a rectangle. Thus, the joint area having the joint part formed by extending one side of the rectangle is formed into a substantially rectangle so as to be easily brought close to the edge of the straight part of the D shape.

It should be noted that as a modified example of the microwave heating apparatus of the sixth embodiment, when a plurality of cut surfaces are symmetrically formed in the radiation guide, the distribution of the microwave in the waveguide can be sometimes uniformized. For example, although Fig. 15 shows an example in which the cut surface 68 is formed in a left part of the combination hole 37 in the second radiation guide 67, a cut surface may be further formed in a right part of the combination hole 37. Even in a case where the radiation guide is not close to the joint area, the cut surface can be formed in the radiation guide so as to function as an adjusting and matching portion for the distribution of the microwave. Due to the formation of the plurality of cut surfaces at symmetrical positions in such a manner, the distribution of the microwave in the vicinity of the combination hole in the waveguide and the distribution of the microwave in the vicinity of the combination hole in the heating chamber are easily made to be symmetrical. Thus, there is an effect of hindering biased distribution of the microwave.

### (Seventh Embodiment)

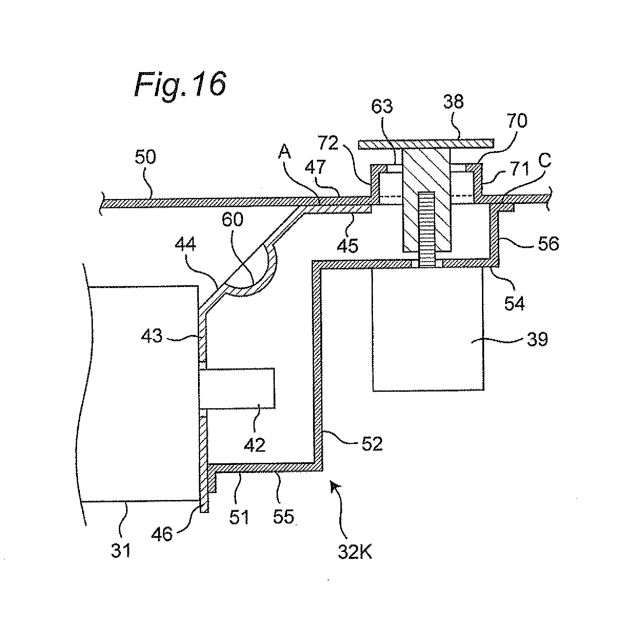

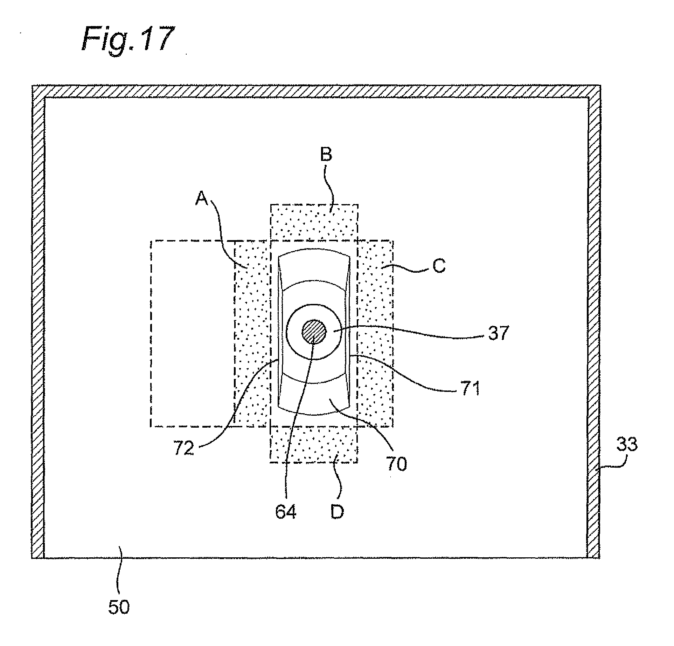

Fig. 16 is a sectional view showing the vicinity of a waveguide in a microwave oven serving as a microwave heating apparatus of a seventh embodiment according to the present invention. Fig. 17 is a plan view of the bottom plate in the microwave heating apparatus of the seventh embodiment. In Fig. 17, the rotation antenna is omitted and the section of the drive shaft thereof is shown. In description of the seventh embodiment, constituent elements having the same function and configuration as the elements in the microwave heating apparatus of the above embodiments will be given the same reference numerals, and descriptions thereof will not be given.

In the microwave heating apparatus of the seventh embodiment, one rotation antenna 38 is provided. Therefore, one combination hole 37 is provided in the bottom plate 50 of the heating chamber 33 in which the rotation antenna 38 is arranged.

In the microwave heating apparatus of the seventh embodiment, a radiation guide 70 is formed on the outer side of the combination hole 37 of the bottom plate 50 similar to the microwave heating apparatus of the sixth embodiment. As shown in Figs. 16 and 17, the radiation guide 70 is expanded around the combination hole 37 so as to protrude toward the side of the heating chamber, and has two cut surfaces 71, 72 at symmetrical position, In Fig. 17, the joint part between the bottom plate 50 of the heating chamber 33 and the first plate 46 is shown as the area A, and the joint parts between the bottom plate 50 and the second plate 51 are shown as the areas B, C, D.

As shown in Fig. 17, in the microwave heating apparatus of the seventh embodiment, the two cut surfaces 71, 72 are formed at facing positions in the radiation guide 70 of the bottom plate 50. In Fig. 17, the first cut surface 71 on the right side in the radiation guide 70 is formed so as to be adjacent to the area C where a part continuous to the end surface (the short surface) 56 close to the rotation antenna 38 of the microwave output part in the second plate 51 and the bottom plate 50 of the heating chamber 33 are jointed to each other. Meanwhile, in Fig. 17, the second cut surface 72 on the left side in the radiation guide 70 is formed so as to be adjacent to the area A where the end 45 continuous to the sloping surface 44 in the first plate 46 and the bottom plate 50 are jointed to each other.

As shown in Fig. 17, the radiation guide 70 has not an annular shape but a shape so that the cut surfaces 71, 72 are formed in a right part and a left part of the radiation guide 70 formed in the circumference of the combination hole 37. In such a manner, the right part and the left part of the radiation guide 70 are horizontal surfaces in the vicinity of the combination hole 37. Thus, the joint area A between the first plate 46 and the bottom plate 50 and the joint area C between the second plate and the bottom plate 50 can be brought close to the combination hole 37.

As described above, even when the second radiation guide 70 has a shape so that part of an annular shape in a plan view is cut out, the second radiation guide 70 still holds the guide function for propagating the microwave in a waveguide 32K to the heating chamber 33.

In the microwave heating apparatus of the seventh embodiment, the matching portion 60 deformed by the press forming is provided in at least part of the sloping surface 44 similar to the microwave heating apparatus of the second embodiment shown in Fig. 6. In such a manner, in the microwave heating apparatus of the seventh embodiment, the matching portion 60 is formed in the sloping surface 44 of the waveguide 32K. Thus, the matching portion 60 can be provided without influencing other constituent elements. In the microwave heating apparatus of the seventh embodiment, since the matching portion 60 is formed in the sloping surface 44, the shape of the heating chamber 33 is not changed, and the heating distribution is not influenced.

As described above, in the microwave heating apparatus of the seventh embodiment according to the present invention, by forming the modified radiation guide 70 in the outer part of the combination hole 37 of the bottom plate 50 of the heating chamber 33, the joint areas A, C can be brought close to the combination hole 37. As a result, the size of the waveguide 32K can be decreased, so that the propagation loss in the wall surface of the waveguide can be reduced and the energy saving performance can be improved. Further, the microwave heating apparatus of the seventh embodiment has a configuration capable of optimizing the heating distribution and the matching state independently from each other, so that the designing is easily performed.

### (Eighth Embodiment)

With a microwave heating apparatus of eighth to thirteenth embodiments described below, the energy is saved in the waveguide, the generation of the discharge phenomenon in the waveguide is further suppressed, and the microwave heating apparatus becomes highly safe and reliable.

Firstly, a mechanism for reducing the discharge phenomenon generated in the waveguide in the conventional microwave heating apparatus will be described.

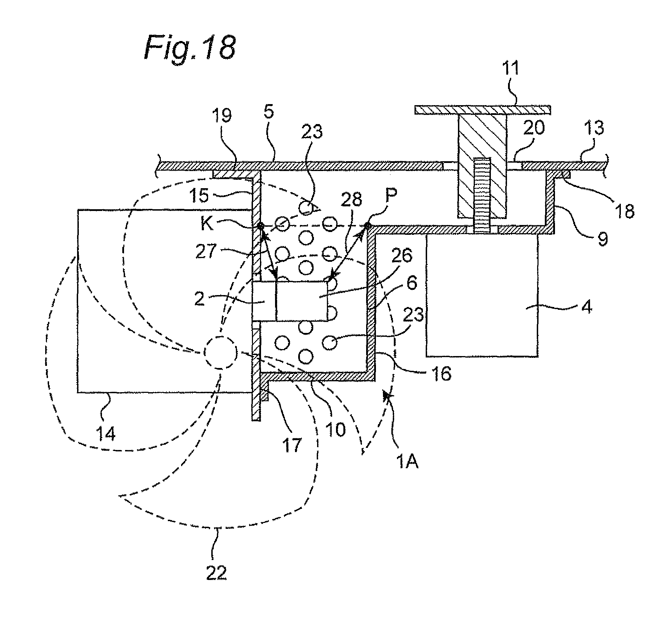

Fig. 18 is a sectional view showing the vicinity of the waveguide of the microwave heating apparatus in which a cooling mechanism is provided for the waveguide shown in Fig. 29 described above.

As shown in Fig. 18, punching holes 23 are provided in the E surface (a surface parallel to a paper plane of Fig. 18) in the waveguide 1A, so that wind fed from one cooling fan 22 cools the magnetron 14, and the wind is also fed from the punching holes 23 to the inside of the waveguide 1A so as to directly cool the antenna 2 of the magnetron 14. By directly cooling the antenna 2, an increase in a temperature of the antenna 2 with which a strong electric field is easily concentrated is suppressed, so that the generation of the discharge phenomenon due to abnormal local heating is suppressed.

In the waveguide 1A shown in Fig. 18, a first H surface 5 is formed by connecting a first plate 15 to which the magnetron 14 is attached and into which the antenna 2 is inserted and a bottom plate 13 forming the bottom surface of the heating chamber. A second H surface 6 of the waveguide 1A is formed by a second plate 16. The second plate 16 is bent so as to form not only the second H surface 6 but also short surfaces 9, 10 serving as both end surfaces of the waveguide 1A, and a first E surface and a second E surface serving as both side surfaces connecting the first H surface 5 and the second H surface 6. The bottom plate 13 of the bottom surface of the heating chamber, the first plate 15, and the second plate 16 are jointed to each other by the spot welding or the compression joint. For example, in Fig. 18, joint parts are shown by the reference numerals 17, 18, 19. In the joint part 19 where the bottom plate 13 and the first plate 15 are jointed to each other, in order to easily joint the plates, an upper end of the first plate 15 is bent leftward, that is, outward of the waveguide 1A as shown in Fig. 18 so as to be parallel to the bottom plate 13 forming the bottom surface of the heating chamber.

In the waveguide 1A, a combination hole 20 is formed in the bottom plate 13 in the vicinity of the short surface 9 of the end surface serving as the microwave output part. A drive shaft of the rotatable rotation antenna 11 is inserted into this combination hole 20, and the rotation antenna 20 is rotated by the motor 4 serving as the drive means connected via the drive shaft.

In the microwave heating apparatus formed as above, the microwave inputted from the antenna 2 of the magnetron 14 into the waveguide is propagated through the inside of the waveguide 1A and radiated from the rotation antenna 11 into the heating chamber.

The cooling fan 22 shown by a broken line in Fig. 18 is a propeller fan arranged on the opposite side relative to the waveguide 1A in the paper plane. The cooling fan 22 cools the entire magnetron 14 and also feeds the wind to the waveguide 1A through the punching holes 23 provided in the first E surface of the waveguide 1A (the surface arranged on the opposite side relative to the waveguide 1A in the paper plane in parallel to the paper plane) so as to directly cool the antenna 2. The cooling air fed into the waveguide 1A is discharged via punching holes provided in the second E surface facing the first E surface or the short surface 10 serving as one end surface of the waveguide 1A.

The configuration of the waveguide 1A shown in Fig. 18 is a general configuration having the width a of the waveguide 1A (refer to Fig. 28) of 85 mm, a diameter in the front end of the antenna 2 of 14 mm. Since the antenna 2 is arranged in a center of the waveguide 1A in the width direction, a distance from an outer surface of the front end of the antenna 2 to the E surface (the surface in which the punching holes are formed) is 35.5 mm (=(85 - 14)/2), which is more than 1/4 (about 30 mm) of the wavelength of the microwave to be used (about 120 mm).

In the conventional microwave heating apparatus formed as above, in a case where a cooling condition is unfavorable, there is a risk that the discharge phenomenon is generated between the antenna 2 of the magnetron 13 serving as the microwave generation means and the wall surface of the waveguide positioned to be distant from the antenna 2 by a length of not more than 1/4 of the wavelength. For example, in the waveguide 1A shown in Fig. 18, a spark is easily generated around a bent part P of the second H surface 6 and a facing position K of the first plate 15 in the first H surface 5 facing the bent position P. According to examination in an experiment by the present inventors, such positions where the spark is easily generated are positions distant from the antenna 2, particularly a metal cap 26 in the front end of the antenna 2 by a distance of about 28 mm. According to this experiment, in a waveguide structure shown in Fig. 18, distances shown by arrows 27 and 28 are about 28 mm. The distance shown by the arrow 27 is a shortest distance from the cap 26 to the facing position K in the first H surface 5. The distance shown by the arrow 28 is a shortest distance from the cap 26 to the facing position P in the second H surface 5. Therefore, the spark which is the discharge phenomenon is generated at positions distant from the antenna 2 by a slightly shorter distance than 1/4 (about 30 mm) of the wavelength of the microwave (about 120 mm). In order to avoid such a spark, methods of increasing an ability of the cooling fan 22 so as to raise the cooling condition and decreasing an output of the magnetron 14 are considered. However, since such methods invite a cost increase and other problems such as a performance decrease are caused, the methods are not preferable.

In the eighth to thirteenth embodiments according to the present invention, there will be described the microwave heating apparatus for saving the energy of the waveguide, and suppressing the generation of the discharge phenomenon between the antenna of the magnetron serving as the microwave generation means and the wall surface of the waveguide positioned to be distant from this antenna by the distance of not more than 1/4 of the wavelength of the microwave, so that high safety is obtained and the designing is easily performed.

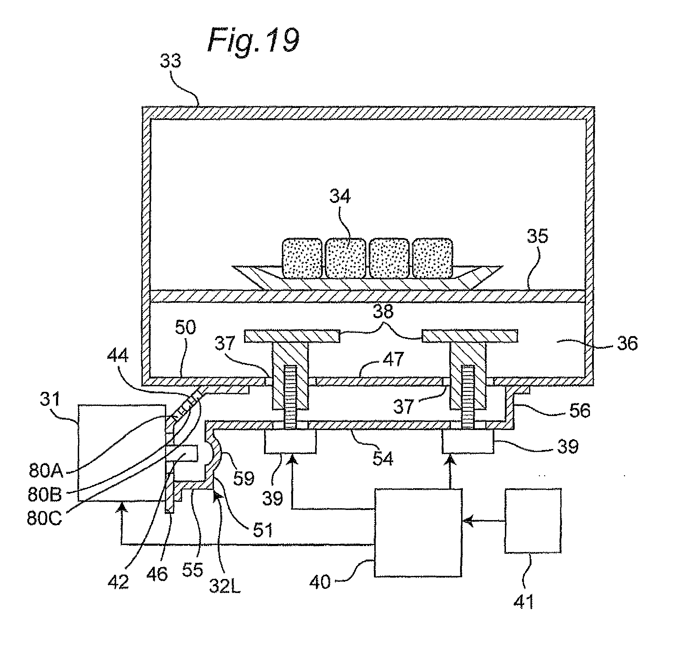

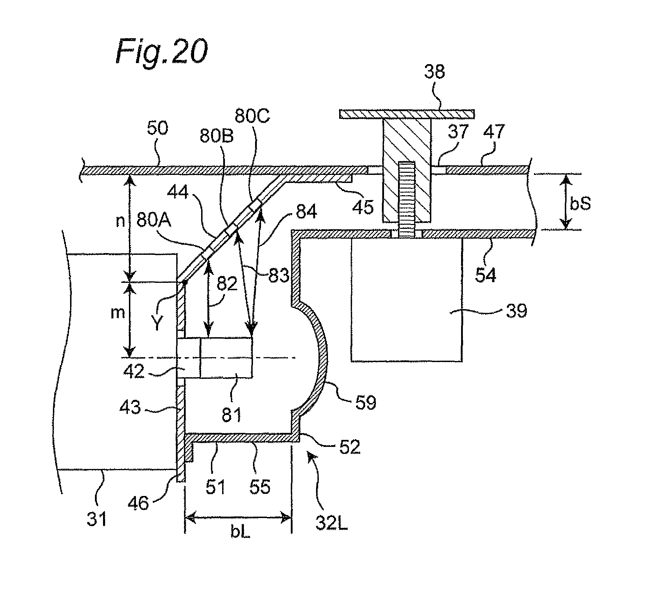

Fig. 19 is a view showing a schematic configuration of a microwave oven serving as the microwave heating apparatus of the eighth embodiment according to the present invention. Fig. 19 is a sectional view of the microwave oven seen from the front side. In the microwave oven shown in Fig. 19, a door (not shown) for bringing the object to be heated in and out of the heating chamber is provided on the near side. Fig. 20 is a sectional view showing the vicinity of a waveguide in the microwave heating apparatus of the eighth embodiment. It should be noted that in the following description of the eighth embodiment, constituent elements having substantially the same function and configuration as the microwave heating apparatus of the above embodiments will be given the same reference numerals, and descriptions thereof will not be given.

In the microwave heating apparatus of the eighth embodiment, the microwave radiated from the magnetron 31 serving as the microwave generation means is propagated through a waveguide 32L and radiated into the heating chamber 33 via the rotation antennas 38, 38. The tray base 35 on which the food 34 and the like are rested is provided inside the heating chamber 33. On the lower side of the tray base 35, the antenna space 36 in which the rotation antennas 38, 38 are arranged is formed. The combination holes 37, 37 into which the drive shafts of the rotation antennas 38, 38 are inserted are formed in the bottom plate 50 serving as the H surface of the waveguide 32 on the side of the bottom surface of the antenna space 36. The motors 39, 39 serving as the drive means of the rotation antennas 38, 38 rotate the rotation antennas 38, 38 via the drive shafts. The rotation actions of the motors 39, 39 are controlled by the control unit 40 in accordance with the condition set by the user in the setting unit 41.

Hereinafter, the waveguide 32L used in the microwave oven serving as the microwave heating apparatus of the eighth embodiment will be described.

With the waveguide 32L having a rectangular section orthogonal to the propagation directions, the propagation direction of the microwave input part in which the antenna 42 of the magnetron 31 is provided and the propagation direction of the microwave output part in which the rotation antennas 38, 38 are provided make a substantially right angle. The waveguide 32L has a pair of H surfaces serving as the magnetic field surfaces and facing each other (a first H surface, a second H surface), and a pair of E surfaces serving as the electric field surfaces and facing each other (a first E surface, a second E surface).

As shown in Fig. 20, the first H surface is formed by the vertical surface 43 into which the antenna 42 of the magnetron 31 is inserted, the sloping surface 44, and part of the bottom plate 50 of the antenna space 36. The second H surface is formed by the vertical surface 52 having the convex portion 59 expanded at a part facing a cap 81 in the front end of the antenna 42 of the magnetron 31, and the horizontal surface 54 connected to the motors 39, 39 for driving the rotation antennas 38, 38.

In the waveguide 32L of the eighth embodiment, as shown in Fig. 20, the first plate 46 forms the vertical surface 43 and the sloping surface 44 of the first H surface, and the bottom plate 50 forms the horizontal surface 47 of the first H surface. In the first plate 46, the end 45 on the side of the heating chamber of the sloping surface 44 is horizontally bent so as to be parallel to the bottom plate 50. The end 45 is fixed to the bottom plate 50 by the joint means such as the spot welding and the compression joint.

Meanwhile, the second H surface is formed by bending the second plate 51. The second plate 51 is bent so as to form the E surfaces serving as the both sides of the second H surface, and the short surfaces 55, 56 serving as the both end surfaces of the waveguide 32L.

The sloping surface 44 is formed in the corner part connecting the microwave input part in which the antenna 42 of the magnetron 31 is provided and the microwave output part in which the rotation antennas 38, 38 are provided in the first H surface of the waveguide 32L. In the waveguide 32L of the eighth embodiment, the corner part in the waveguide is obliquely cut for shortening the propagation route of the microwave in comparison to the configurations of the waveguides 1A, 1B shown in Figs. 29 and 30.

In the waveguide 32L in the microwave heating apparatus of the eighth embodiment, the bending start position Y (refer to Fig. 20) of the sloping surface 44 in the first H surface has the distance m from the center of the antenna 42 in the vertical direction of about 25 mm. In comparison to the wavelength of the microwave (about 120 mm) to be used in the microwave oven, the distance m is the distance of about 1/4 wavelength. It should be noted that, herein, about 1/4 wavelength is within a range of 1/4 ± 20% of the wavelength of the microwave to be used. The distance n from the bending start position Y to the bottom plate 50 forming the bottom surface of the heating chamber 33 is similarly about 25 mm. In the waveguide 32L of the eighth embodiment, although the angle made by the sloping surface 44 and the bottom surface of the heating chamber 33 is about 45 degrees, a preferable range of this angle is from 30 to 60 degrees.

Specific dimensions of the waveguide 32L in the microwave heating apparatus of the eighth embodiment are not shown since Figs. 19 and 20 are both sectional views cut at the centers of the H surfaces of the waveguide 32L. However, the width (the dimension shown by the width a in Fig. 28) is about 85 mm. Regarding the heights of the wavelength 32H (the dimension shown by the width b in Fig. 28), the height of the microwave input part in which the antenna 42 of the magnetron 31 is provided (the height shown by the reference character bL in Fig. 20) is about 31 mm, and the height of the microwave output part in which the rotation antennas 38 are provided (the height shown by the reference character bS in Fig. 20) is about 16.5 mm.

In the microwave heating apparatus of the eighth embodiment, as shown in Fig. 20, punching holes 80A, 80B, 80C serving as a plurality of discharge prevention holes are formed in the sloping surface 44 forming the first H surface. The punching hole 80A is arranged in the sloping surface 44 so that a distance between the punching hole 80A which is the closest to the antenna 42 and the antenna 42 is a shorter distance than 1/4 of the wavelength of the microwave to be used.

In the microwave heating apparatus of the eighth embodiment, the metal cap 81 is provided in the front end of the antenna 42. Therefore, a shortest distance between the antenna 42 and the punching holes 80A, 80B, 80C is substantially a shortest distance from the cap 81 to the punching hole 80A. As specific dimensions in an actual microwave oven, the shortest distance from the cap 81 to the punching hole 80A (an arrow 82 in Fig. 20) is 27 mm, a shortest distance from the cap 81 to the punching hole 80B (an arrow 83 in Fig. 20) is 29 mm, and a shortest distance from the cap 81 to the punching hole 80C (an arrow 84 in Fig. 20) is 32 mm. Therefore, in this microwave oven, the shortest distance between the antenna 42 and the punching holes 80A, 80B, 80C is 27 mm, which is not more than 1/4 (about 30 mm) of the wavelength. The punching holes 80A, 80B, 80C are formed within a range of 1/4 ± 10% of the wavelength, preferably within a range of 1/4 ± 20% of the wavelength.

In the microwave heating apparatus of the eighth embodiment formed as above, the punching holes 80A, 80B, 80C serving as the discharge prevention holes are formed at positions on the upper side of the antenna 42 of the magnetron 31. The punching holes 80A, 80B, 80C are formed at the time of press processing of the first plate 46. The waveguide 32L is formed so that the protruding direction of a burr generated at the time of the processing is outward of the waveguide 32L (upper leftward in Fig. 20).

It should be noted that although the three punching holes in the sloping surface 44 are shown in the sectional view of Fig. 20, the present invention is not limited to this number. A plurality of punching holes are formed in the width direction (the direction orthogonal to the paper plane in Fig. 20) of the waveguide 32L. In the waveguide 32L of the eighth embodiment, seven rows of the punching holes are arranged although not shown. Thus, 21 punching holes (three punching holes x seven rows) are formed in the sloping surface 44. In the waveguide 32L of the eighth embodiment, a diameter of the punching holes is 2.5 mm. However, the diameter may be as small as the microwave is not leaked out to the exterior, and hence can be as large as about 10 mm.

As described above, in the microwave heating apparatus of the eighth embodiment, the discharge prevention punching holes are formed in the sloping surface 44 in the wall surface of the waveguide at positions distant from the antenna 42 by not more than 1/4 of the wavelength of a frequency to be used (about 120 mm). Considering that the standing wave is generated in the waveguide 32L for propagating the microwave, the position of the antenna 42 is the loop of the standing wave (the position where the strength of the electric field is maximum), and the position distant from the antenna 42 by 1/4 of the wavelength is to be the node of the standing wave (the position where the strength of the electric field is minimum). Therefore, an electric potential difference between both the positions is always large, and both the positions are in a relationship by which the spark is easily generated. However, by forming the punching holes at the positions distant from the antenna 42 by not more than 1/4 of the wavelength, the electric field is not generated at the positions of the punching holes. Thus, the spark is not easily generated. As a result, the microwave heating apparatus of the eighth embodiment becomes a highly safe heating apparatus in which the discharge phenomenon is suppressed and the designing for ensuring safety is easily performed.

In the microwave heating apparatus of the eighth embodiment, the metal cap 81 is provided in the front end of the antenna 42. However, only by forming the discharge prevention holes at the positions distant from the cap 81 by not more than 1/4 of the wavelength, the spark is not easily generated particularly between the metal cap 81 and the wall surface of the waveguide. Therefore, the microwave heating apparatus of the eighth embodiment has a configuration capable of easily designing a highly safe heating apparatus.

As described above, in the microwave heating apparatus of the eighth embodiment, the discharge prevention holes are arranged at the positions on the upper side of the antenna 42 of the magnetron 31. In general, it is thought that before the spark serving as the discharge phenomenon is generated, the electric field is concentrated on the part and the temperature is increased. Thus, by preventing the increase in the temperature, the generation of the spark can be suppressed. Therefore, with the microwave heating apparatus of the eighth embodiment, since heat in the waveguide due to the increase in the temperature of the antenna 42 is released from the discharge prevention holes to the exterior, the heat in the waveguide is not kept on the upper side of the radiation antenna, so that an abnormally high temperature in a local part inside the waveguide is prevented so as to reduce the generation of the discharge phenomenon. As a result, the microwave heating apparatus of the eighth embodiment becomes a highly safe heating apparatus in which the generation of the discharge phenomenon is suppressed and the energy is saved.

In the microwave heating apparatus of the eighth embodiment, the protruding direction of the burr generated at the time of forming the punching holes serving as the discharge prevention holes is outward of the waveguide 32L (upper leftward in Fig. 20). In general, the electric field is easily concentrated on an edge part. However, the edge due to the burr generated in outer peripheries of the holes at the time of forming the punching holes is only on the outer side of the waveguide 32L. Thus, the electric field is not concentrated in the vicinity of the punching holes in the waveguide. Therefore, in terms of this point as well, the microwave heating apparatus of the eighth embodiment becomes a highly safe heating apparatus in which the generation of the discharge phenomenon is suppressed and the designing is easily performed.

It should be noted that although an example in which the discharge prevention holes are arranged in a plurality of rows is described in the microwave heating apparatus of the eighth embodiment, the present invention is not limited to this configuration. Even in a case where one hole is formed in the sloping surface 44, the effect of suppressing the discharge phenomenon can be expected. However, in order to prevent radio wave leakage from the waveguide 32L to the exterior, a too large diameter of the punching holes is problematic. Therefore, arrangement of a plurality of rows having the plurality of punching holes is a configuration having an effect capable of effectively releasing the heat in the waveguide over a wide range.

For example, the diameter of one punching hole is preferably not more than 10 mm at maximum, in a case where thickness of the wall surface of the waveguide is not more than 1 mm. However, in a case where the burr is formed outward, the substantially same effect as a case where the thickness is increased can be obtained. Thus, in a case where a protruding height of the burr is about 5 mm, the diameter of the punching holes can be as large as 20 mm at maximum. In the eighth embodiment, an example in which the circular punching holes having the diameter of 2.5 mm are formed is described. However, in the present invention, there is no need for limiting a shape of the punching holes to a circular shape. The shape may be a square hole, or a thin and long hole such as a slit as long as it is a through hole for passing the hot air. Thus, the shape is not limited.

In the eighth embodiment, although the discharge prevention holes formed in the sloping surface 44 are expressed as the punching holes, a hole formation step is not limited. The same effect can be obtained not only with the punching holes mechanically made by performing the press processing onto a plate having no holes but also with the punching holes made by any method as long as the holes can be formed in the wall surface of the waveguide, and the above holes are included in the present invention.

### (Ninth Embodiment)

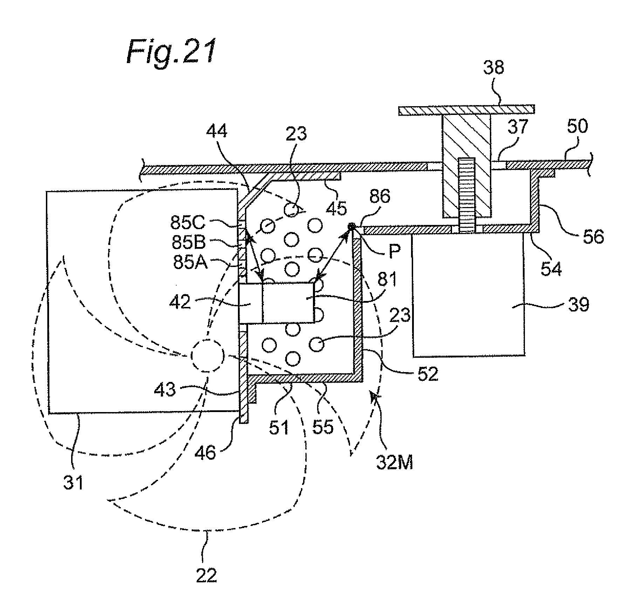

Fig. 21 is a sectional view showing the vicinity of a waveguide in a microwave oven serving as the microwave heating apparatus of the ninth embodiment according to the present invention. In the microwave heating apparatus of the ninth embodiment, one rotation antenna 38 is provided and a propagation distance in a waveguide 32M is short. In the microwave heating apparatus of the ninth embodiment, punching holes 85A, 85B, 85C serving as the plurality of discharge prevention holes are formed in the vertical surface 43 of the first H surface in which the antenna 42 of the magnetron 31 is provided. A punching hole 86 serving as the discharge prevention hole is formed at the bent position P serving as the bent part in the second H surface facing the first H surface.

It should be noted that in the microwave heating apparatus of the ninth embodiment, constituent elements having substantially the same function as the constituent elements of the above embodiments will be given the same reference numerals and described. Hereinafter, a detailed configuration of the microwave heating apparatus of the ninth embodiment will be described.

The cooling fan 22 is shown by a broken line in Fig. 21, and the cooling fan 22 is a propeller fan arranged on the opposite side relative to the waveguide 32M in the paper plane. The cooling fan 22 cools the entire magnetron 31 and also feeds the cooling air into the waveguide 32M through the punching holes 23 provided in the first E surface of the waveguide 32M (the surface arranged on the opposite side relative to the waveguide 32M in the paper plane of Fig. 21 in parallel to the paper plane) so as to directly cool the antenna 42 and the cap 81 thereof. The cooling air fed into the waveguide 32M is discharged via the punching holes provided in the second E surface facing the first E surface (the surface on the near side relative to the waveguide 32M in the paper plane of Fig. 21 in parallel to the paper plane). In the microwave heating apparatus of the ninth embodiment, the punching hole 86 serving as a ventilation hole is also formed at the bent position P serving as the bent part of the second H surface in the waveguide 32M, so that the air after cooling is discharged. It should be noted that a punching hole may be provided in the short surface 51 serving as the end surface of the microwave input part in the waveguide 32M, so that the cooling air is discharged.

As shown in Fig. 21, in the waveguide 32M in the microwave heating apparatus of the ninth embodiment, the punching holes 85A, 85B, 85C are formed in the vertical surface 43 of the first plate 46 to which the magnetron 31 is connected. Specific dimensions in the waveguide 32M in the microwave heating apparatus of the ninth embodiment are as follows.

A distance from the cap 81 provided in the front end of the antenna 42 of the magnetron 31 to the closest punching hole 85A is 24 mm. A distance from the cap 81 to the punching hole 85B is 26 mm, and a distance from the cap 81 to the punching hole 85C is 28 mm. In such a manner, the distances from the cap 81 to the punching holes 85A, 85B, 85C are all the distance of not more than 1/4 of the wavelength (about 120 mm). The punching hole 86 formed in the second H surface is formed at the bent position P in the second H surface. A distance from the cap 81 to the punching hole 86 is 28 mm, which is the distance of not more than 1/4 of the wavelength (about 120 mm).

In the waveguide 32M in the microwave heating apparatus of the ninth embodiment, the cooling air by the cooling fan 22 is brought into the waveguide 32M from a large number of punching holes 23 formed in the E surface. However, since the punching holes 85A, 85B, 85C formed in the vertical surface 43 in the first H surface of the waveguide 32M are closed by the magnetron 31, the cooling air is not brought in and out via these punching holes 85A, 85B, 85C.

By forming the punching holes 85A, 85B, 85C serving as the plurality of discharge prevention holes at positions distant from the antenna 42 by not more than 1/4 of the wavelength in the vertical surface 43 of the first H surface, the vertical surface 43 distant from the antenna 42 by not more than 1/4 of the wavelength in the first H surface has a convex and concave shape. In this area, the discharge phenomenon is more unlikely to be generated. Therefore, the microwave heating apparatus of the ninth embodiment becomes a highly safe heating apparatus in which the designing is easily performed.

### (Tenth Embodiment)

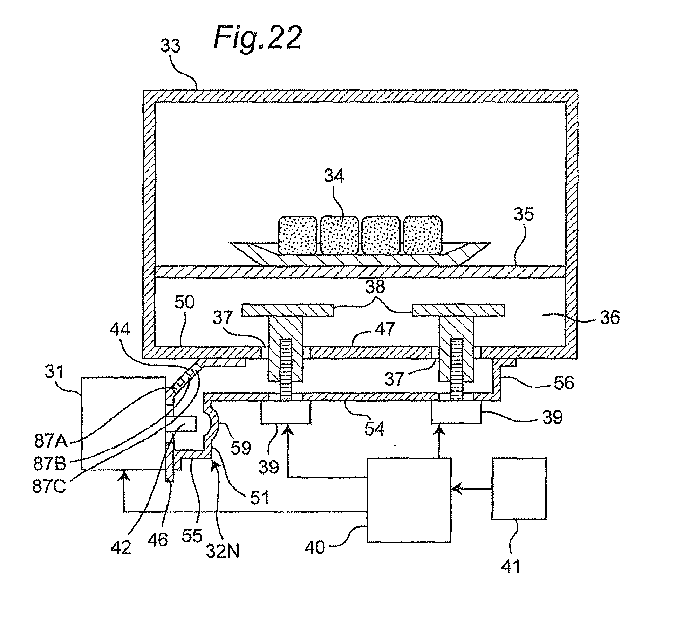

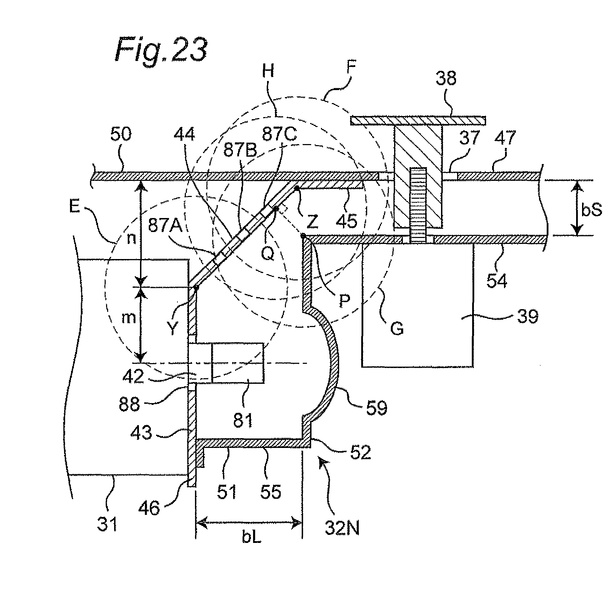

Fig. 22 is a front sectional view showing a schematic configuration of a microwave oven serving as the microwave heating apparatus of the tenth embodiment according to the present invention. In the microwave oven shown in Fig. 22, a door (not shown) for bringing the object to be heated in and out of the heating chamber is provided on the near side. Fig. 23 is a sectional view showing the vicinity of a waveguide in the microwave heating apparatus of the tenth embodiment.

The microwave heating apparatus of the tenth embodiment has substantially the same configuration as the configuration of the microwave heating apparatus of the eighth embodiment described with reference to Figs. 19 and 20. In the microwave heating apparatus of the tenth embodiment, as shown in Figs. 22 and 23, punching holes 87A, 87B, 87C serving as the plurality of discharge prevention holes are formed in the sloping surface forming the first H surface, and the microwave heating apparatus has substantially the same configuration as the configuration of the eighth embodiment. In the microwave heating apparatus of the tenth embodiment, a view regarding positions where the punching holes 87A, 87B, 87C are formed is different from the microwave heating apparatus of the eighth embodiment. Therefore, in the tenth embodiment, constituent elements having substantially the same function as the constituent elements used in the microwave heating apparatus of the eighth embodiment will be given the same reference numerals, and characteristic parts will be described in detail.

In the microwave heating apparatus of the tenth embodiment, the microwave radiated from the magnetron 31 is propagated through a waveguide 32N and radiated into the heating chamber 33 via the two rotation antennas 38, 38. The tray base 35 on which the food 34 and the like are rested is provided inside the heating chamber 33. On the lower side of the tray base 35, the antenna space 36 in which the two rotation antennas 38, 38 are arranged is formed. The combination holes 37, 37 into which the drive shafts of the rotation antennas 38, 38 are inserted are formed in the horizontal surface 47 of the bottom plate 50 serving as the H surface of the waveguide 32 on the side of the bottom surface of the antenna space 36. The motors 39, 39 serving as the drive means of the rotation antennas 38, 38 rotate the rotation antennas via the drive shafts. The rotation actions of the motors 39, 39 are controlled by the control unit 40 in accordance with the condition set by the user in the setting unit 41.

Hereinafter, the waveguide 32N used in the microwave oven serving as the microwave heating apparatus of the tenth embodiment will be described.

With the waveguide 32N having a rectangular section orthogonal to the propagation directions, the propagation direction of the microwave input part in which the antenna 42 of the magnetron 31 is provided and the propagation direction of the microwave output part in which the rotation antennas 38, 38 are provided make a substantially right angle. The waveguide 32N has a pair of H surfaces serving as the magnetic field surfaces and facing each other (a first H surface, a second H surface), and a pair of E surfaces serving as the electric field surfaces and facing each other (a first E surface, a second E surface).

As shown in Fig. 23, the first H surface is formed by the vertical surface 43 into which the antenna 42 of the magnetron 31 is inserted, the sloping surface 44, and part of the bottom plate 50 of the antenna space 36 of the heating chamber 33. The second H surface is formed by the vertical surface 52 having the convex portion 59 expanded at the part facing the front end of the antenna 42 of the magnetron 31, and the horizontal surface 54 connected to the motors 39 for driving the rotation antennas 38.

In the waveguide 32N of the tenth embodiment, as shown in Fig. 23, the first plate 46 forms the vertical surface 43 and the sloping surface 44 of the first H surface, and the bottom plate 50 forms the horizontal surface 47 of the first H surface.

Meanwhile, the second H surface is formed by bending the second plate 51. The second plate 51 is bent so as to form the E surfaces serving as the both sides of the second H surface, and the short surfaces 55, 56 serving as the both end surfaces of the waveguide 32N.

The sloping surface 44 is formed in the corner part connecting the microwave input part in which the antenna 42 of the magnetron 31 is provided and the microwave output part in which the rotation antennas 38, 38 are provided in the first H surface of the waveguide 32N.

In the waveguide 32N in the microwave heating apparatus of the tenth embodiment, the bending start position Y of the sloping surface 44 in the first H surface has the distance m from the center of the antenna 42 in the vertical direction of about 25 mm. In comparison to the wavelength of the microwave (about 120 mm) to be used in the microwave oven, the distance m is the distance of about 1/4 wavelength. Herein, about 1/4 wavelength is within a range of 1/4 ± 20% of the wavelength of the microwave to be used. The distance n from the bending start position Y to the bottom plate 50 forming the bottom surface of the heating chamber 33 is similarly about 25 mm. It should be noted that in the waveguide 32N of the tenth embodiment, although the angle made by the sloping surface 44 and the bottom surface of the heating chamber 33 is 45 degrees, a preferable range of this angle is from 30 to 60 degrees.

Regarding specific dimensions of the waveguide 32N in the microwave heating apparatus of the tenth embodiment, the width (the dimension shown by the width a in Fig. 28) is about 85 mm. Regarding the heights of the waveguide 32N (the dimension shown by the width b in Fig. 28), the height of the microwave input part in which the antenna 42 of the magnetron 31 is provided (the height shown by the reference character bL in Fig. 23) is about 31 mm, and the height of the microwave output part in which the rotation antennas 38 are provided (the height shown by the reference character bS in Fig. 23) is about 16.5 mm.

In the microwave heating apparatus of the tenth embodiment, the propagation direction of the microwave input part and the propagation direction of the microwave output part in the waveguide 32N are orthogonal to each other, and the punching holes 87A, 87B, 87C serving as the plurality of discharge prevention holes are formed in the corner part thereof, In the microwave heating apparatus of the tenth embodiment, the corner part of the waveguide 32N is defined as follows.

The corner part in the waveguide 32N includes the wall surface of the waveguide placed in a first area surrounded by a circle around a first bent position Y serving as the bent part between the vertical surface 43 and the sloping surface 44 forming the first H surface, the circle having a radius of 1/4 of the wavelength of the microwave (about 120 mm) (in an area shown by a broken line circle E in Fig. 23). The corner part in the waveguide 32N includes the wall surface of the waveguide placed in a second area surrounded by a circle around a second bent position Z serving as the bent part between the sloping surface 44 and the end 45 jointed to the bottom plate 50 forming the first H surface, the circle having a radius of 1/4 of the wavelength of the microwave (about 120 mm) (in an area shown by a broken line circle F in Fig. 23). Further, the corner part in the waveguide 32N includes the wall surface of the waveguide placed in a third area surrounded by a circle around a third bent position P serving as the bent part between the vertical surface 52 and the horizontal surface 54 forming the second H surface, the circle having a radius of 1/4 of the wavelength of the microwave (about 120 mm) (in an area shown by a broken line circle G in Fig. 23). The corner part in the waveguide 32N includes the wall surface of the waveguide placed in a fourth area surrounded by a circle around a position Q where a perpendicular line from the third bent position P in the second H surface crosses the facing sloping surface 44, the circle having a radius of 1/4 of the wavelength of the microwave (about 120 mm) (in an area shown by a broken line circle H in Fig. 23).

In the areas of the corner part of the waveguide 32N defined as above, all the punching holes 87A, 87B, 87C serving as the discharge prevention holes of the tenth embodiment are arranged. Particularly, in the microwave heating apparatus of the tenth embodiment, in the first H surface in which the antenna 42 of the magnetron 31 is provided and the combination holes 37 for the rotation antennas 38 are formed, the punching holes 87A, 87B, 87C serving as the discharge prevention holes are formed in the sloping surface 44 forming the first H surface.

In the microwave heating apparatus of the tenth embodiment, the protruding direction of the burr generated at the time of forming the punching holes is outward of the waveguide 32N (upper leftward in Fig. 23). Therefore, the microwave heating apparatus of the tenth embodiment becomes a highly safe heating apparatus in which the generation of the discharge phenomenon is suppressed and the designing is easily performed.

It should be noted that although the three punching holes 87A, 87B, 87C in the sloping surface 44 are shown in the sectional view of Fig. 23, the present invention is not limited to this number. The plurality of punching holes are formed in the width direction (the direction orthogonal to the paper plane of Fig. 23) of the waveguide 32N. In the waveguide 32N of the tenth embodiment, seven rows of the punching holes are arranged although not shown. Thus, 21 punching holes (three punching holes x seven rows) are formed in the sloping surface 44. In the waveguide 32N of the tenth embodiment, the diameter of the punching holes is 2.5 mm. However, the diameter may be as small as the microwave is not leaked out to the exterior, and hence can be as large as about 10 mm.

As described above, with the microwave heating apparatus of the tenth embodiment, the punching holes 87A, 87B, 87C serving as the discharge prevention holes are arranged in the corner part of the bent waveguide 32N. The waveguide 32N of the tenth embodiment has a structure in which the electric field is concentrated in the corner part, particularly between the third bent position P in the second H surface and the facing position (for example, the position shown by the reference character Q in Fig. 23), so that the spark is easily generated. However, in the waveguide 32N of the tenth embodiment, despite such a structure, since the plurality of discharge prevention holes are formed in the corner part, the electric field is not generated in the part of the holes, so that the spark is not easily generated. Therefore, the microwave heating apparatus of the tenth embodiment has an excellent configuration capable of ensuring high safety despite that the designing is easily performed.

In the microwave heating apparatus of the tenth embodiment, the corner part in which the discharge prevention holes are formed is the areas surrounded by the circles around the bent positions Y, Z, P and the facing position Q, the circles having the radiuses of 1/4 of the wavelength of the microwave as described above, so that the discharge prevention holes are formed within these areas. In the microwave heating apparatus of the tenth embodiment, the discharge prevention holes are formed in the corner part of the inner wall of the waveguide where the spark is easily generated. Since the electric field is not generated in the part where the holes are formed, the discharge phenomenon is not easily generated. Thus, the microwave heating apparatus of the tenth embodiment becomes a highly safe heating apparatus.

In the microwave heating apparatus of the tenth embodiment, the waveguide 32N has the pair of H surfaces facing each other (the first H surface, the second H surface), and the pair of E surfaces facing each other (the first E surface, the second E surface). The first H surface serves as an outer part and the second H surface is bent so as to serve as an inner part in the bent waveguide 32N. In the waveguide 32N formed in such a manner, freedom of selecting a place where the punching holes are formed is available in the corner part in the first H surface serving as the outer part more than the corner part in the second H surface serving as the inner part. Thus, there is an effect of performing the designing more easily.

Further, in the bent waveguide 32N formed in such a manner, the discharge prevention holes are formed in the first H surface serving as the outer part. In the waveguide for propagating the microwave in the TE10 mode, the electric field is generated only between the first H surface and the second H surface. In the microwave heating apparatus of the tenth embodiment, the punching holes 87A, 87B, 87C serving as the discharge prevention holes are formed in the H surface where the electric field is to be actually generated, so that the electric field is not generated in the part of the holes. Thus, the spark is not easily generated. Therefore, the microwave heating apparatus of the tenth embodiment has a configuration that the designing for ensuring safety is easily performed.

In the microwave heating apparatus of the tenth embodiment, the first H surface has the sloping surface 44 for shortening the propagation route in the corner part, and the discharge prevention holes are formed in the sloping surface 44. In the microwave heating apparatus formed in such a manner, the sloping surface 44 of the first H surface and the second H surface are brought close to each other, so that the configuration that the spark is easily generated is easily produced. However, in the waveguide 32N of the tenth embodiment, by forming the discharge prevention holes in the sloping surface 44, the electric field is not generated in the part of the holes. Thus, the spark is not easily generated, so that the designing for ensuring safety can be easily performed.

Further, the protruding direction of the burr of the punching holes 87A, 87B, 87C serving as the discharge prevention holes is outward of the waveguide 32N (upper leftward of Fig. 23). Therefore, the concentration of the electric field inside the waveguide 32 is suppressed, so that a structure where the spark is not easily generated is produced.

It should be noted that although an example in which the plurality of punching holes serving as the discharge prevention holes are arranged is described in the microwave heating apparatus of the tenth embodiment, the present invention is not limited to this configuration. Even in a case where one hole is formed in the sloping surface 44, the effect can be expected. However, in order to prevent the radio wave leakage from the waveguide 32N to the exterior, the too large diameter of the punching holes is not preferable. Therefore, the arrangement of the plurality of rows having the plurality of punching holes is the configuration with the effect capable of effectively releasing the heat in the waveguide over a wide range.

In the tenth embodiment, although the holes formed in the sloping surface 44 are expressed as the punching holes, the hole formation step is not limited. The same effect can be obtained not only with the punching holes mechanically made by performing the press processing onto the plate having no holes but also with the punching holes made by any method as long as the holes can be formed in the wall surface of the waveguide, and the above holes are included in the present invention.

### (Eleventh Embodiment)

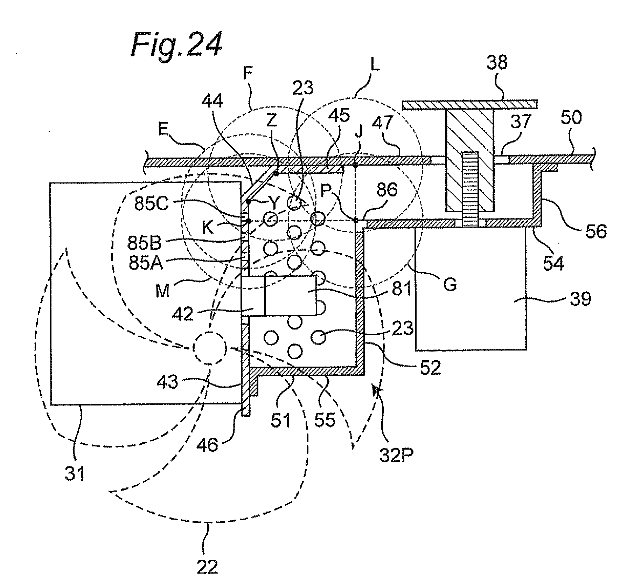

Fig. 24 is a sectional view showing the vicinity of a waveguide in a microwave oven serving as the microwave heating apparatus of the eleventh embodiment according to the present invention. In the microwave heating apparatus of the eleventh embodiment, one rotation antenna 38 is provided and the propagation distance in a waveguide 32P is short.

The microwave heating apparatus of the eleventh embodiment has substantially the same configuration as the configuration of the microwave heating apparatus of the ninth embodiment described with reference to Fig. 21. In the microwave heating apparatus of the eleventh embodiment, as shown in Fig. 24, the punching holes 85A, 85B, 85C serving as the plurality of discharge prevention holes are formed in the vertical surface 43 forming the first H surface, and the punching hole 86 serving as the discharge prevention hole is formed at the bent position P in the second H surface. In such a manner, the microwave heating apparatus of the eleventh embodiment has substantially the same configuration as the configuration of the ninth embodiment. In the microwave heating apparatus of the eleventh embodiment, a view regarding positions where the punching holes 85A, 85B, 85C are formed is different from the microwave heating apparatus of the ninth embodiment. Therefore, in the eleventh embodiment, constituent elements having substantially the same function as the constituent elements used in the microwave heating apparatus of the ninth embodiment will be given the same reference numerals, and characteristic parts will be described in detail.

A characteristic of the microwave heating apparatus of the eleventh embodiment is a point that the discharge prevention punching holes 85A, 85B, 85C, 86 are formed in the corner part in a waveguide 32P bent at a right angle. In the microwave heating apparatus of the eleventh embodiment, the corner part of the waveguide 32P is defined as follows.

The corner part in the waveguide 32P includes the wall surface of the waveguide placed in the first area surrounded by the circle around the first bent position Y serving as the bent part between the vertical surface 43 and the sloping surface 44 forming the first H surface, the circle having the radius or 1/4 of the wavelength of the microwave (in the area shown by the broken line circle E in Fig. 24). The corner part in the waveguide 32P includes the wall surface of the waveguide placed in the second area surrounded by the circle around the second bent position Z serving as the bent part between the sloping surface 44 and the end 45 jointed to the bottom plate 50 forming the first H surface, the circle having the radius of 1/4 of the wavelength of the microwave (in the area shown by the broken line circle F in Fig. 24). Further, the corner part in the waveguide 32P includes the wall surface of the waveguide placed in the third area surrounded by the circle around the third bent position P serving as the bent part between the vertical surface 52 and the horizontal surface 54 forming the second H surface, the circle having the radius of 1/4 of the wavelength of the microwave (in the area shown by the broken line circle G in Fig. 24).

The corner part in the waveguide 32P includes the wall surface of the waveguide placed in a fourth area surrounded by a circle around a facing position J where a perpendicular line from the third bent position P in the second H surface crosses the facing horizontal surface 47 in the first H surface, the circle having a radius of 1/4 of the wavelength of the microwave (in an area shown by a broken line circle L in Fig. 24).
Further, the corner part in the waveguide 32P includes the wall surface of the waveguide placed in a fifth area surrounded by a circle around a facing position K where a perpendicular line from the third bent position P in the second H surface crosses the facing vertical surface 43 in the first H surface, the circle having a radius of 1/4 of the wavelength of the microwave (in an area shown by a broken line circle M in Fig. 24).

In the areas of the corner part of the waveguide 32P defined as above, all the punching holes 85A, 85B, 85C serving as the discharge prevention holes of the eleventh embodiment are arranged. Particularly, in the microwave heating apparatus of the eleventh embodiment, in the vertical surface 43 of the first H surface in which the antenna 42 of the magnetron 31 is provided, the punching holes 85A, 85B, 85C serving as the discharge prevention holes are formed.

In the microwave heating apparatus of the eleventh embodiment, the discharge prevention holes are formed within a range of the third area surrounded by the circle around the third bent position P of the second H surface, the circle having the radius of 1/4 of the wavelength, and the fifth area surrounded by the circle around the facing position K in the vertical surface 43 of the first H surface, the circle having the radius of 1/4 of the wavelength, that is, all the discharge prevention holes are arranged in the corner part. As described above, in the microwave heating apparatus of the eleventh embodiment, the discharge prevention holes serving as the part of the holes where the spark discharge is not easily generated are formed in the areas distant from a place where the discharge phenomenon is easily generated by the radiuses of 1/4 of the wavelength of the microwave. Particularly, in the microwave heating apparatus of the eleventh embodiment, the discharge prevention holes are formed in both the first H surface and the second H surface in the waveguide 32P. Thus, the discharge phenomenon is further suppressed, and the designing for ensuring safety is easily performed.

### (Twelfth Embodiment)

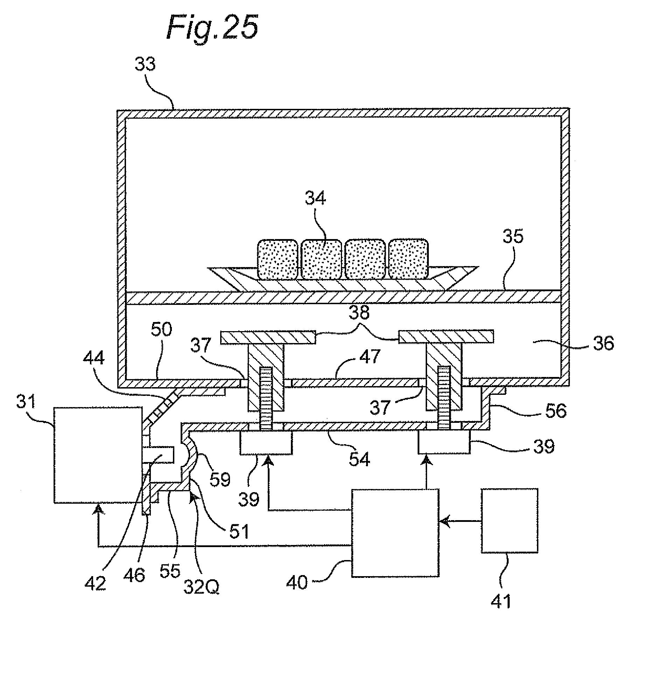

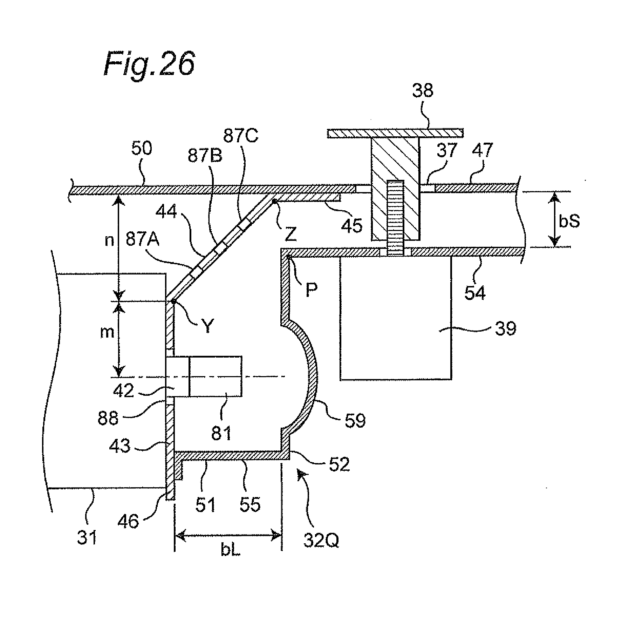

Fig. 25 is a front sectional view showing a schematic configuration of a microwave oven serving as the microwave heating apparatus of the twelfth embodiment according to the present invention. In the microwave oven shown in Fig. 25, a door (not shown) for bringing the object to be heated in and out of the heating chamber is provided on the near side. Fig. 26 is a sectional view showing the vicinity of a waveguide in the microwave heating apparatus of the twelfth embodiment.

The microwave heating apparatus of the twelfth embodiment has substantially the same configuration as the configuration of the microwave heating apparatus of the eighth embodiment described with reference to Figs. 19 and 20. In the microwave heating apparatus of the twelfth embodiment, as shown in Figs. 25 and 26, the punching holes 87A, 87B, 87C serving as the plurality of discharge prevention holes are formed in the sloping surface forming the first H surface, and the microwave heating apparatus has substantially the same configuration as the configuration of the eighth embodiment. In the microwave heating apparatus of the twelfth embodiment, the view regarding the positions where the punching holes 87A, 87B, 87C are formed is different from the microwave heating apparatus of the eighth embodiment. The microwave heating apparatus of the twelfth embodiment is different in a view that the positions where the punching holes 87A, 87B, 87C are formed are not specified to the sloping surface of the first H surface but the punching holes are formed in at least one of the H surfaces. Therefore, in the twelfth embodiment, constituent elements having substantially the same function as the constituent elements used in the microwave heating apparatus of the eighth embodiment will be given the same reference numerals, and characteristic parts will be described in detail.

A waveguide 32Q used in the microwave oven serving as the microwave heating apparatus of the twelfth embodiment will be described.

With the waveguide 32Q having a rectangular section orthogonal to the propagation directions, the propagation direction of the microwave input part in which the antenna 42 of the magnetron 31 is provided and the propagation direction of the microwave output part in which the rotation antennas 38, 38 are provided make a substantially right angle. The waveguide 32Q has a pair of H surfaces serving as the magnetic field surfaces and facing each other (a first H surface, a second H surface), and a pair of E surfaces serving as the electric field surfaces and facing each other (a first E surface, a second E surface).

As shown in Fig. 26, the first H surface is formed by the vertical surface 43 into which the antenna 42 of the magnetron 31 is inserted, the sloping surface 44, and part of the bottom plate 50 of the antenna space 36 of the heating chamber 33. The second H surface is formed by the vertical surface 52 having the convex portion 59 expanded at the part facing the front end of the antenna 42 of the magnetron 31, and the horizontal surface 54 connected to the motors 39 for driving the rotation antennas 38.

In the waveguide 32Q of the twelfth embodiment, as shown in Fig. 26, the first plate 46 forms the vertical surface 43 and the sloping surface 44 of the first H surface, and the bottom plate 50 forms the horizontal surface 47 of the first H surface. In the first plate 46, the end 45 on the side of the heating chamber of the sloping surface 44 is horizontally bent so as to be parallel to the bottom plate 50. The end 45 is fixed to the bottom plate 50 by the fixing means such as the spot welding and the compression joint.

Meanwhile, the second H surface is formed by bending the second plate 51. The second plate 51 is bent so as to form the E surfaces serving as the both sides of the second H surface, and the short surfaces 55, 56 serving as the both end surfaces of the waveguide 32Q.

The sloping surface 44 is formed in the corner part connecting the microwave input part in which the antenna 42 of the magnetron 31 is provided and the microwave output part in which the rotation antennas 38, 38 are provided in the first H surface of the waveguide 32Q.

In the waveguide 32Q in the microwave heating apparatus of the twelfth embodiment, the bending start position Y of the sloping surface 44 in the first H surface has the distance m from the center of the antenna 42 in the vertical direction of about 25 mm. In comparison to the wavelength of the microwave (about 120 mm) to be used in the microwave oven, the distance m is the distance of about 1/4 wavelength. The distance n from the bending start position Y to the bottom plate 50 forming the bottom surface of the heating chamber 33 is similarly about 25 mm.

Regarding specific dimensions of the waveguide 32Q in the microwave heating apparatus of the twelfth embodiment, the width (the dimension shown by the width a in Fig. 28) is about 85 mm. Regarding the heights of the waveguide 32Q (the dimension shown by the width b in Fig. 28), the height of the microwave input part in which the antenna 42 of the magnetron 31 is provided (the height shown by the reference character bL in Fig. 26.) is about 31 mm, and the height of the microwave output part in which the rotation antennas 38 are provided (the height shown by the reference character bS in Fig. 26) is about 16.5 mm.

In the microwave heating apparatus of the twelfth embodiment, the propagation direction of the microwave input part and the propagation direction of the microwave output part in the waveguide 32Q are orthogonal to each other, and the waveguide 32Q has the two H surfaces facing each other (the magnetic field surfaces) and the two E surfaces facing each other (the electric field surfaces) orthogonal to the H surfaces. The bent waveguide 32Q is bent in the H surfaces. In the waveguide 32Q of the twelfth embodiment, one of the two H surfaces facing each other is provided with microwave input means into which the microwave from the microwave generation means is radiated, and microwave output means for radiating the microwave to the heating chamber 33. That is, in the microwave heating apparatus of the twelfth embodiment, in the first H surface of the waveguide 32Q, the antenna 42 of the magnetron 31 is provided and the rotation antennas 38 for radiating the microwave propagated through the waveguide 32Q to the heating chamber 33 are provided. In the first H surface, the discharge prevention punching holes 87A, 87B, 87C are formed in the sloping surface 44 on the upper side of the antenna 42.

It should be noted that although the three punching holes 87A, 87B, 87C in the sloping surface 44 are shown in the sectional view of Fig. 26, the present invention is not limited to this number. The plurality of punching holes are also formed in the width direction (the direction orthogonal to the paper plane in Fig. 26) of the waveguide 32Q. In the waveguide 32Q of the twelfth embodiment, seven rows of the punching holes are arranged although not shown. Thus, 21 punching holes (three punching holes x seven rows) are formed in the sloping surface 44. In the waveguide 32Q of the twelfth embodiment, the diameter of the punching holes is 2.5 mm. However, the diameter may be as small as the microwave is not leaked out to the exterior, and hence can be as large as about 10 mm.

In the microwave heating apparatus of the twelfth embodiment according to the present invention formed as above, by forming the discharge prevention holes in at least one of the two H surfaces facing each other (the first H surface), although the spark is easily generated due to the electric field generated between the antenna 42 and the first H surface and the second H surface of the waveguide 32Q in the TE10 mode, the generation of the discharge phenomenon is suppressed. This is because since the electric field is not generated in the part of the holes, the discharge phenomenon is not easily generated by forming the discharge prevention holes. In such a manner, by forming the discharge prevention holes at the positions on the upper side of the position of the antenna 42 serving as the microwave input means in at least one of the H surfaces, the generation of the discharge phenomenon is suppressed, so that the heating apparatus becomes highly safe. As described above, due to a technological idea that the discharge prevention holes are formed at the positions on the upper side of the position of the microwave input means in at least one of the H surfaces, the microwave heating apparatus of the twelfth embodiment has a structure capable of building a waveguide for ensuring safety in which the designing is easily performed.

In the microwave heating apparatus of the twelfth embodiment, an opening 88 is formed in the waveguide 32Q, and the antenna 42 of the magnetron 31 is inserted and arranged into this opening 88. The opening 88 is formed in one of the two H surfaces facing each other (the first H surface), and the discharge prevention holes are formed in this first H surface. In such a manner, the first area of the H surface having the opening 88 is an area on the side of the microwave input part into which the antenna 42 is inserted and arranged. Thus, the microwave is radiated from the antenna 42 and the surely strong electric field is generated in the area. By forming the discharge prevention holes in this area, the electric field is not easily generated in this area.

In the microwave heating apparatus of the twelfth embodiment, the protruding direction of the burr generated at the time of forming the punching holes serving as the discharge prevention holes is outward of the waveguide 32Q (upper leftward in Fig. 26). In general, the electric field is easily concentrated on the edge. However, the edge due to the burr generated in the outer peripheries of the holes at the time of forming the punching holes is only on the outer side of the waveguide 32Q. Thus, the electric field is not concentrated in the vicinity of the punching holes in the waveguide. Therefore, the microwave heating apparatus of the twelfth embodiment becomes a highly safe heating apparatus in which the generation of the discharge phenomenon is suppressed and the designing is easily performed.

It should be noted that although an example in which the discharge prevention holes are arranged in a plurality of rows is described in the microwave heating apparatus of the twelfth embodiment, the present invention is not limited to this configuration. Even in a case where one hole is formed at the position on the upper side of the antenna 42 in at least one of the H surfaces, the effect of suppressing the discharge phenomenon can be expected. However, in order to prevent the radio wave leakage from the waveguide 32Q to the exterior, the too large diameter of the punching holes is not preferable. Therefore, the arrangement of the plurality of rows having the plurality of punching holes is the configuration having the effect capable of more effectively releasing the heat in the waveguide over a wide range.

In the twelfth embodiment, although the holes formed in the first H surface are expressed as the punching holes, the hole formation step is not limited. The same effect can be obtained not only with the punching holes mechanically made by performing the press processing onto the plate having no holes but also with the punching holes made by any methods as long as the holes can be formed in the wall surface of the waveguide, and the above holes are included in the present invention.

### (Thirteenth Embodiment)

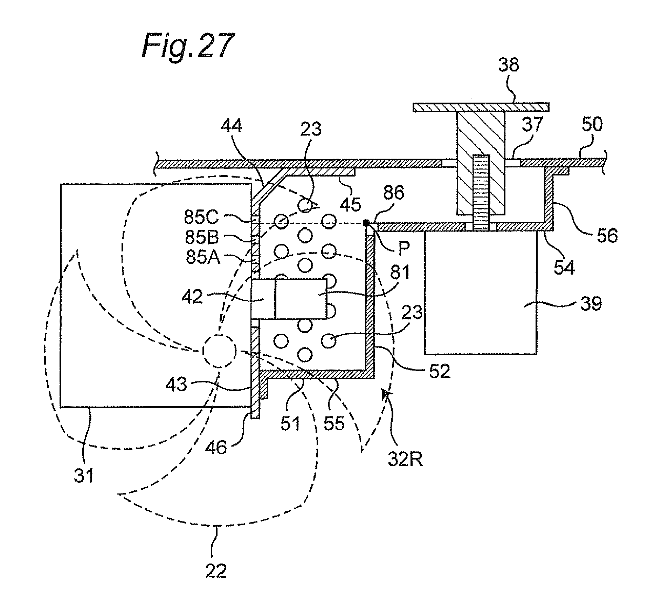

Fig. 27 is a sectional view showing the vicinity of a waveguide in a microwave oven serving as the microwave heating apparatus of the thirteenth embodiment according to the present invention. In the microwave heating apparatus of the thirteenth embodiment, one rotation antenna 38 is provided and the propagation distance in a waveguide 32R is short.

The microwave heating apparatus of the thirteenth embodiment has substantially the same configuration as the configuration of the microwave heating apparatus of the ninth embodiment described with reference to Fig. 21. In the microwave heating apparatus of the thirteenth embodiment, as shown in Fig. 27, the punching holes 85A, 85B, 85C serving as the plurality of discharge prevention holes are formed in the vertical surface 43 forming the first H surface, and the punching hole 86 serving as the discharge prevention hole is formed at the bent position P in the second H surface. In such a manner, the microwave heating apparatus of the thirteenth embodiment has substantially the same configuration as the configuration of the ninth embodiment. In the microwave heating apparatus of the thirteenth embodiment, the view regarding the positions where the punching holes 85A, 85B, 85C are formed is different from the microwave heating apparatus of the ninth embodiment. Therefore, in the thirteenth embodiment, constituent elements having substantially the same function as the constituent elements used in the microwave heating apparatus of the ninth embodiment will be given the same reference numerals, and characteristic parts will be described in detail.

In the waveguide 32R in the microwave heating apparatus of the thirteenth embodiment, the punching holes 85A, 85B, 85C serving as the plurality of discharge prevention holes are formed in the vertical surface 43 of the first H surface in which the antenna 42 of the magnetron 31 is provided. In the waveguide 32R, the punching holes 85A, 85B, 85C are formed at the positions on the upper side of the antenna 42. The punching hole 86 is formed at the bent position P in the second H surface facing the first H surface, that is, a position where the vertical surface 52 crosses the horizontal surface 54.

The cooling fan 22 shown by a broken line in Fig. 27 is the propeller fan arranged on the opposite side relative to the waveguide 32R in the paper plane. The cooling fan 22 cools the entire magnetron 31 and also feeds the cooling air into the waveguide 32R through the punching holes 23 provided in the first E surface of the waveguide 32R (the surface arranged on the opposite side relative to the waveguide 32R in the paper plane of Fig. 27 in parallel to the paper plane) so as to directly cool the antenna 42 and the cap 81 thereof. The cooling air fed into the waveguide 32N is discharged via punching holes (not shown) formed in the second E surface facing the first E surface (the surface on the near side relative to the waveguide 32R in the paper plane of Fig. 27 in parallel to the paper plane).

In the microwave heating apparatus of the thirteenth embodiment, the punching hole 86 is formed in the bent part of the second H surface in the waveguide 32R as described above, so that the air after cooling is discharged.

As shown in Fig. 27, in the waveguide 32R in the microwave heating apparatus of the thirteenth embodiment, the punching holes 85A, 85B, 85C are formed in the vertical surface 43 of the first plate 46 to which the magnetron 31 is connected, at the positions on the upper side of the antenna 42 in the vertical surface 43.

In the waveguide 32R in the microwave heating apparatus of the thirteenth embodiment, the cooling air by the cooling fan 22 is brought into the waveguide 32R from a large number of punching holes 23 formed in the E surface. However, since the punching holes 85A, 85B, 85C formed in the vertical surface 43 in the first H surface of the waveguide 32R are closed by the magnetron 31, the cooling air is not brought in and out via these punching holes 85A, 85B, 85C.

As described above, in the microwave heating apparatus of the thirteenth embodiment, the punching holes 85A, 85B, 85C, 86 serving as the discharge prevention holes are formed in both the first plate 46 forming the first H surface and the second plate 51 forming the second H surface. Thus, although the spark is easily generated due to the electric field generated between the antenna 42 and the first H surface and the second H surface of the waveguide 32N originally in the TE10 mode, the generation of the discharge phenomenon is suppressed. This is because since the electric field is not generated in the part of the holes, the discharge phenomenon is not easily generated by forming the discharge prevention holes. In such a manner, the spark is not easily generated in both the H surfaces in the waveguide 32R, so that the heating apparatus becomes highly safe. As described above, due to a technological idea that the discharge prevention holes are formed at the positions on the upper side of the position of the microwave input means in the vertical surface of the H surface, the microwave heating apparatus of the thirteenth embodiment has a structure capable of building a highly reliable waveguide for ensuring safety in which the designing is easily performed.

In the microwave heating apparatus of the thirteenth embodiment, the plurality of discharge prevention punching holes 23 are also provided in the two E surfaces facing each other. These punching holes 23 do not prevent the generation of the electric field like the punching holes 85A, 85B, 85C, 86 but have an object of preventing the generation of the spark as well as the discharge prevention punching holes 85A, 85B, 85C, 86. The punching holes 23 formed in the E surfaces feed the cooling air from the cooling fan 22 to the inside of the waveguide 32R. Therefore, by the punching holes 23, the cooling air is fed to the inside of the waveguide so as to prevent the increase in the temperature inside the waveguide and suppress the generation of the discharge phenomenon. In such a manner, the microwave heating apparatus of the thirteenth embodiment has a structure in which the designing of a highly safe heating apparatus can be easily performed.

Specifically, the cooling air from the cooling fan 22 is fed from the punching holes 23 provided in the first E surface of the waveguide 32R into the waveguide 32R, and after directly cooling the antenna 42 and the inner wall surfaces such as the H surfaces, the cooling air is discharged to the exterior of the waveguide 32R via the punching holes (not shown) formed in the second E surface and the punching hole 86.

It should be noted that although the punching holes are formed in both the two E surfaces facing each other so that the cooling air is fed in the microwave heating apparatus of the thirteenth embodiment, the same effect is obtained even when the cooling air is brought in from the punching holes formed in one of the E surfaces and discharged from the punching holes formed in the second H surface for designing reasons.

In the microwave heating apparatus of the thirteenth embodiment, the discharge prevention holes may be formed in the short surface 55 serving as the end surface on the side of the microwave input part in which the microwave generation means is provided in the waveguide 32R. With such a configuration, the cooling air is smoothly fed inside the waveguide via the discharge prevention holes in the short surface in the waveguide 32R. With the microwave heating apparatus of the thirteenth embodiment formed in such a manner, the increase in the temperature inside the waveguide is suppressed, the discharge phenomenon is not easily generated, and higher safety can be ensured.

Further, in the microwave heating apparatus of the thirteenth embodiment, by forming the discharge prevention holes in the short surface 56 serving as the end surface on the side of the heating chamber in the waveguide 32R, the cooling air is smoothly fed inside the waveguide via the discharge prevention holes of the short surface 56. As a result, the increase in the temperature is suppressed, the discharge phenomenon is not easily generated and the heating apparatus becomes more highly safe.

### Industrial Applicability

With the microwave heating apparatus of the present invention, even in a case where the microwave is propagated from the bent waveguide to the heating chamber, the heating efficiency is high and the energy saving performance is improved. Thus, the microwave heating apparatus is useful as the microwave oven, an oven, and a defrost device of cooking tools in which the microwave is used, heating apparatuses for various dielectric materials of non-cooking tools, drying devices for wood materials and the like, and heating and sintering devices in pottery.

## Claims

1. A microwave heating apparatus, comprising:
microwave generation means;
a heating chamber accommodating an object to be heated; and
a waveguide for propagating a microwave from the microwave generation means to the heating chamber, wherein
the waveguide having a square section orthogonal to a propagation route has a bent propagation route, and includes a pair of magnetic field surfaces facing each other, and a pair of electric field surfaces facing each other, and
one magnetic field surface of the pair of magnetic field surfaces has a vertical surface, a horizontal surface, and a sloping surface making predetermined angles with the horizontal surface and the vertical surface, the one magnetic field surface being provided with a mechanism into which the microwave from the microwave generation means is introduced, and a mechanism for radiating the microwave propagated through the waveguide to the heating chamber.

2. The microwave heating apparatus according to claim 1, wherein
the sloping surface in the magnetic field surface is formed between the vertical surface and the horizontal surface so that the vertical surface and the horizontal surface are continuous to each other for shortening the propagation route of the waveguide.

3. The microwave heating apparatus according to claim 1, wherein
a shortest distance from the mechanism into which, the microwave from the microwave generation means is introduced, the mechanism being provided in the magnetic field surfaces, to a formation position of the sloping surface in the magnetic field surface is a length within a range from 1/8 to 3/8 of a wavelength of the microwave.

4. The microwave heating apparatus according to claim 3, wherein
the mechanism into which the microwave is introduced, the mechanism being provided in the magnetic field surface, is an antenna, and
a shortest distance from a center of the antenna to the formation position of the sloping surface in the magnetic field surface is a length of 1/4 ± 20% of the wavelength of the microwave.

5. The microwave heating apparatus according to claim 1, wherein
a matching portion is provided in the sloping surface in the magnetic field surface.

6. The microwave heating apparatus according to claim 5, wherein
the matching portion is formed by deforming part of the sloping surface by a press forming.

7. The microwave heating apparatus according to claim 1, wherein
in the waveguide, a distance between the pair of magnetic field surfaces in an area where the mechanism into which the microwave from the microwave generation means is introduced is provided is within a range from one to two times more than a distance between the pair of magnetic field surfaces in an area where the mechanism for radiating the microwave propagated through the waveguide to the heating chamber is provided.

8. The microwave heating apparatus according to claim 7, wherein
in the waveguide, the distance between the pair of magnetic field surfaces in the area where the mechanism into which the microwave from the microwave generation means is introduced is provided is a length of 1/4 ± 20% of a wavelength of the microwave from the microwave generation means, and
the distance between the pair of magnetic field surfaces in the area where the mechanism for radiating the microwave to the heating chamber is provided is a length of 1/8 ± 20% of the wavelength of the microwave from the microwave generation means.

9. The microwave heating apparatus according to claim 7 or 8, wherein
in the waveguide, a convex portion protruding toward the outside of the waveguide is formed in the other magnetic field surface facing the one magnetic field surface provided with the mechanism into which the microwave from the microwave generation means is introduced.

10. The microwave heating apparatus according to claim 1, wherein
the mechanism for radiating the microwave propagated through the waveguide to the heating chamber includes an opening portion formed in a wall surface of the heating chamber, and
a radiation guide for making the opening portion protrude toward a side of the heating chamber is formed in the wall surface of the heating chamber.

11. The microwave heating apparatus according to claim 10, wherein
the radiation guide is formed so as to protrude toward an inside of the heating chamber in an outer peripheral part of the opening portion, the radiation guide having a shape so that part of an annular shape in a plan view is cut out.

12. The microwave heating apparatus according to claim 11, wherein
the radiation guide formed in the outer peripheral part of the opening portion has a substantially D shape in a plan view.

13. The microwave heating apparatus according to claim 11, wherein
the radiation guide formed in the outer peripheral part of the opening portion has a symmetrical shape relative to a propagation direction of the waveguide in a plan view.

14. The microwave heating apparatus according to claim 1, wherein
a discharge prevention hole for reducing strength of an electric field in a particular area is formed in a wall surface forming the waveguide.

15. The microwave heating apparatus according to claim 14, wherein
the discharge prevention hole is formed in the wall surface of a corner part of the waveguide having the bent propagation route of the microwave.

16. The microwave heating apparatus according to claim 15, wherein
the discharge prevention hole is formed in the sloping surface of the waveguide.

17. The microwave heating apparatus according to claim 14, wherein
the mechanism into which the microwave is introduced, the mechanism being provided in the magnetic field surface, is an antenna, and
the discharge prevention hole is formed at a position distant from a center of the antenna by a length of not more than 1/4 ± 20% of a wavelength of the microwave in the magnetic field surface.

18. The microwave heating apparatus according to claim 14, wherein
the discharge prevention hole is formed in the wall surface on an upper side in a vertical direction of the mechanism into which the microwave is introduced, the mechanism being provided in the magnetic field surface.

19. The microwave heating apparatus according to claim 14, wherein
a protruding direction of a burr formed when press processing the discharge prevention hole is outward of the waveguide.

20. The microwave heating apparatus according to claim 14, wherein
in the other magnetic field surface facing the one magnetic field surface provided with the mechanism into which the microwave from the microwave generation means is introduced and the mechanism for radiating the microwave propagated through the waveguide to the heating chamber, the discharge prevention hole is formed in an area facing the sloping surface forming the one magnetic field surface.

21. The microwave heating apparatus according to claim 1, wherein
in the other magnetic field surface facing the one magnetic field surface provided with the mechanism into which the microwave from the microwave generation means is introduced and the mechanism for radiating the microwave propagated through the waveguide to the heating chamber, a sloping surface is formed so as to face the sloping surface formed in the one magnetic field surface.

22. The microwave heating apparatus according to claim 1, wherein
the sloping surface in the magnetic field surface is formed to be a curved surface continuously connecting the vertical surface and the horizontal surface for shortening the propagation route of the waveguide.

23. The microwave heating apparatus according to claim 1, wherein
the sloping surface in the magnetic field surface is formed in a corner part between the vertical surface and the horizontal surface and formed in at least part of the magnetic field surface in a width direction orthogonal to the propagation route.

24. The microwave heating apparatus according to claim 14, wherein
the discharge prevention hole is formed in the wall surface at a position corresponding to a node of a standing wave in the waveguide for propagating the microwave.
